# EUROPEAN PATENT SPECIFICATION

(11) **EP 0 541 374 B1**
(45) Date of publication and mention of the grant of the patent: **02.05.1997**
(21) Application number: 92310133.1
(22) Date of filing: 05.11.1992
(51) Int. Cl.: H04N 15/00

(54) **A three-dimensional display system**
Ein dreidimensionales Abbildungssystem
Système display à trois dimensions

(30) Priority: 05.11.1991 JP 288986/91; 05.11.1991 JP 288987/91
(43) Date of publication of application: 12.05.1993
(73) Proprietor: SHARP KABUSHIKI KAISHA, Osaka 545 (JP)
(72) Inventor: Ishii, Yutaka, Nara-shi, Nara-ken (JP); Yamamoto, Yoshitaka, Yamatokoriyama-shi, Nara-ken (JP)
(74) Representative: White, Martin David

(56) References cited:
- EP-A- 0 294 899
- EP-A- 0 332 268
- DE-A- 4 040 081
- DE-A- 4 040 251
- US-A- 4 647 966
- US-A- 4 792 850
- US-A- 4 906 071
- PATENT ABSTRACTS OF JAPAN vol. 12, no. 225 (E-626)25 June 1988 & JP-A-63 018 894
- FKT FERNSEH UND KINOTECHNIK vol. 44, no. 11, 1990, HEIDELBERG DE page 645 R. SAND 'Sequentielles und paralleles 3D-TV'
- PATENT ABSTRACTS OF JAPAN vol. 14, no. 219 (P-1045)9 May 1990 & JP-A-20 50 146
- PATENT ABSTRACTS OF JAPAN vol. 13, no. 38 (E-709)27 January 1989 & JP-A-63 236 494
- PATENT ABSTRACTS OF JAPAN vol. 14, no. 452 (P-1112)27 September 1990 & JP-A-21 81 138

## Description

### BACKGROUND OF THE INVENTION

### 1. Field of the Invention:

The present invention relates to a three-dimensional display system for three-dimensionally displaying objects, landscapes, etc.

### 2. Description of the Related Art:

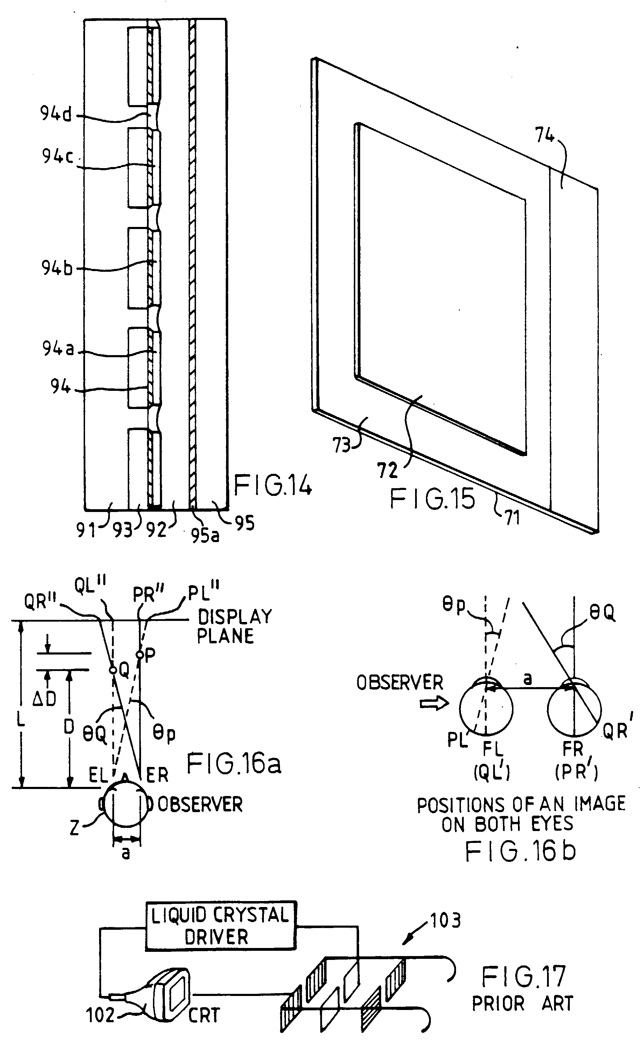

The display principle of a three-dimensional display system will be described with reference to Figures **16a** and **16b.** As shown in Figure **16a,** when an observer **Z** watches an object **P** disposed in front of the observer **Z,** the object **P** is caught at a position **PR'** (Figure **16b**) which is the same position as a center **FR** of the retina of a right eye of the observer **Z.** In contrast, the object **P** is caught at a position **PL'** which is slightly shifted from a center **FL** of the retina of a left eye of the observer **Z.** More specifically, the object **P** is caught by the right eye as if it is positioned in front thereof; however, the object **P** is caught by the left eye as if it is shifted right. Moreover, as shown in Figure **16a,** the observer **Z** watches an object **Q** disposed in front of the left eye, the object **Q** is caught at a position **QL'** of the retina of the left eye, and the object **Q** is caught at a position **QR'** of the retina of the right eye (Figure **16b**). More specifically, the object **Q** is caught by the left eye as if it is positioned in front thereof; however, the object **Q** is caught by the right eye as if it is shifted left. In this way, a shift is caused between the positions of images of the object caught by the right and left eyes. The amount of the shift is referred to as a binocular parallax, and is represented by the following equation (I). 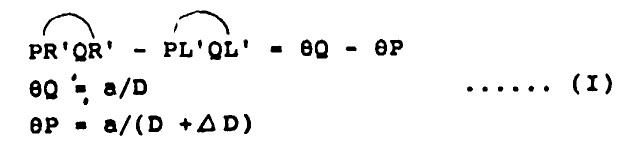 where
θQ is a shift angle when the objects **P** and **Q** are caught by the right eye.
θP is a shift angle when the objects **P** and **Q** are caught by the left eye.
D is a distance from the eyes to the object **Q**.
Δ D is a difference between the distance from the eyes to the object **Q** and the distance from the eyes to the object **P**.

It becomes possible to three-dimensionally catch the objects by providing a display plane with important information regarding the depth of the objects, taking advantage of the binocular parallax. More specifically, in order that the objects **P** and **Q** are displayed on the display plane disposed at a distance (observation distance **L**) from the observer **Z**, the following structure is considered: an image of the object **P** for a left eye, an image of the object **P** for a right eye, an image of the object **Q** for a left eye, and an image of the object **Q** for a right eye are displayed at positions **PL''**, **PR''**, **QL''** and **QR''**; and the images displayed at the positions **PR''** and **QR''** are perceived by the right eye and the images displayed at the positions **PL''** and **QL''** are perceived by the left eye.

As a conventional projection type liquid crystal display, the following devices of various systems are known. Such systems are described, for example, in JP-A- 63 018 894 and US-A- 4 647 966.

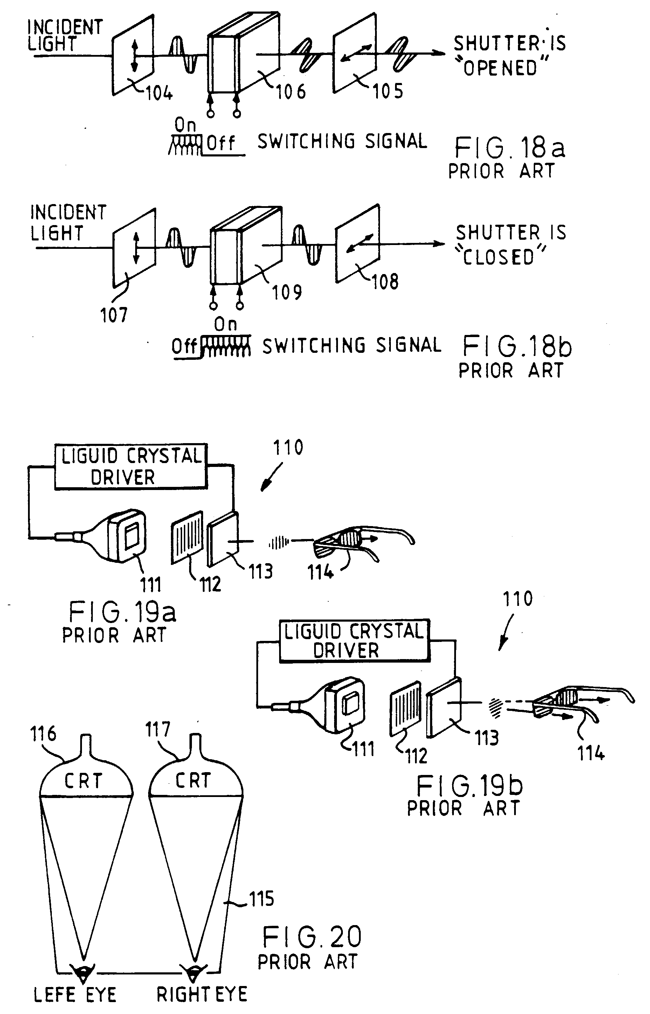

First, a time-division three-dimensional display system will be described. According to this system, as shown in Figure 17, signals for the right and left eye are recorded, for example, in a video disk, and the respective signals are alternately read to be displayed on a CRT 102, while the observer wears shutter eyeglasses 103 which can alternately open or close a visual field of the right or left eye in synchronism with the display. In this way, a three-dimensional display can be perceived due to the binocular parallax. As the shutter eyeglasses 103, TN (Twisted Nematic) liquid crystal eyeglasses as shown in Figure 18 are generally used.

The eyeglasses 103 have two shutter mechanisms. One of the mechanisms includes two polarizing plates (detectors) 104 and 105, and a liquid crystal display 106 sandwiched therebetween as shown in Figure 18a. The other mechanism has also the same structure, in which two polarizing plates (detectors) 107 and 108, and a liquid crystal display 109 are included as shown in Figure 18b. The shutter operation of the shutter eyeglasses 103 is described as follows:

The liquid crystal display of either one of the mechanisms, e.g., the liquid crystal display 106 is not applied with a voltage. Under this condition, polarized light which is incident upon the liquid crystal display 106 through the polarizing plate 104 is rotated by nearly 90° using an optical characteristic of a TN display mode and is emitted from the liquid crystal display **106**. The emitted light is transmitted through the polarizing plate **105** whose polarizing direction is made parallel with that of the emitted light, whereby a shutter is "opened". At this time, the liquid crystal display of the other mechanism, e.g., the liquid crystal display **109** is applied with a voltage higher than a certain threshold value. Under this condition, polarized light which is incident upon the liquid crystal display **109** through the polarizing plate **107** is emitted therefrom without being rotated. Thus, the emitted light cannot be transmitted through the polarizing plate **108** whose polarizing direction is not made parallel with that of the emitted light, whereby a shutter is "closed".

As described above, desired CRT images can be presented to both right and left eyes by alternately applying a voltage to the respective shutters of the shutter eyeglasses **103** so that the open/close operation is conducted. A time-division three-dimensional display system used for a video disk, in which a field frequency for switching shutters is 60 Hz, has already been placed on the market. However, this type of system has some problems such as flickering caused by switching of shutters, low vertical resolution, and difficulty in miniaturization. In order to overcome the problem of flickering, the following system has been proposed: image signals with respect to the right and left eyes are stored in a one-stage frame memory, the signals are read at a frequency twice as high as when the signals are written, and then images are displayed on a CRT at 120 Hz. According to this system, although the problem of flickering can be overcome, there is a disadvantage in that the shutter eyeglasses should be responded at higher speed.

Another example of the time-division display system is shown in Figures **19a** and **19b**. According to this system, as shown in Figure **19a**, one display mechanism is provided. A display mechanism **110** includes a CRT **111**, a polarizer **112** disposed in front of the CRT **111**, and an optical modulator **113** such as a liquid crystal panel and a PLZT (solid solution (Pa, La)(Zr, Ti)O₃), which can rotate the polarized direction of polarized light emitted from the polarizer **112** by 90° or which can maintain the direction without rotating it. In this system, as shown in Figure **19a**, an image for a right eye is displayed on the CRT **111** at a certain timing, and an image for a left eye is displayed on the CRT **111** at a subsequent timing, while an observer wears polarizing eyeglasses **114**, each glass having a polarizing direction rotated by 90° with respect to the other. In this way, because of the same operating principle as that of the former example, a three-dimensional display is made possible. In this system, there is an advantage in that the polarizing eyeglasses **114** do not require a cord for supplying a voltage. However, this system also has problems such as low resolution and difficulty in miniaturization because of the time-division display.

In addition to the above-mentioned time-division three-dimensional display system, a non-time-division three-dimensional display system will be described. There are also various types of non-time-division three-dimensional systems; for example, the following five systems are known.

A first example is a stereoviewer system as shown in Figure **20**. According to this system, two miniaturized CRTs **116** and **117** are provided in front of left and right eyes with lenses **115** disposed between the eyes and the CRTs **116** and **117**. Images corresponding to the binocular parallax are displayed on the respective CRTs **116** and **117**, whereby a three-dimensional display is performed. However, this system has disadvantages in that only one person can watch, a relatively large device should be used in front of the eyes, causing inconvenience, and miniaturized CRTs **116** and **117** are required, making the visual field narrower.

A second example is an anaglyph system (not shown) in which images for the right and left eyes are divided into blue and red colored portions and three-dimensionally displayed, and the displayed images are watched by using polarizing eyeglasses. In this system, although the structure itself can be simplified, there are problems such as an unsatisfactory color display, low resolution, and difficulty in miniaturization.

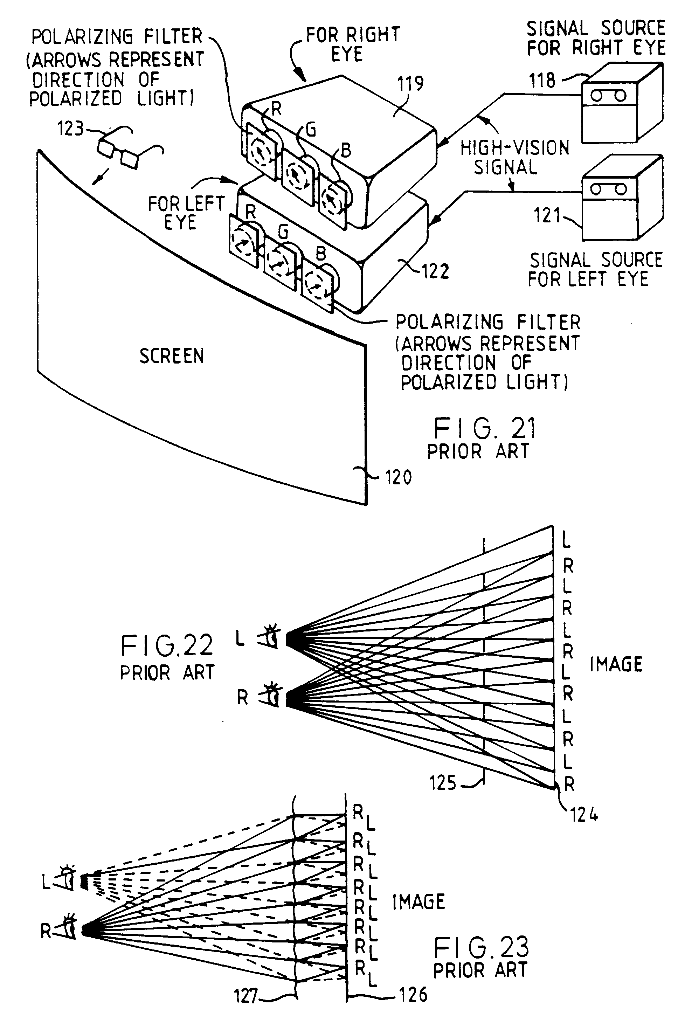

A third example is a polarized image synthetic system. According to this system, as shown in Figure **21**, a high-vision signal is transmitted from a signal source **118** for a right eye to a CRT **119** for a right eye equipped with polarizing filters, and an image formed by the CRT **119** is projected on a screen **120**. On the other hand, a high-vision signal is transmitted from a signal source **121** for a left eye to a CRT **122** for a left eye equipped with polarizing filters, and an image formed by the CRT **122** is projected on the screen **120**. At this time, the images for right and left eyes are polarized and the polarizing directions thereof are crossed at 90°. And an observer watches the screen **120**, wearing eyeglasses **123** each glass having a polarizing direction rotated by 90° with respect to each other, whereby the observer can three-dimensionally perceive the image. However, this system uses two CRTs **119** and **122** and the screen **120**, so that the miniaturization of the system has been difficult.

A forth example is a parallax barrier system as shown in Figure **22** (plan view). According to this system, a stripe-shaped barrier **125** is provided in a vertical direction of a screen **124** of a CRT, and an observer, who is in a specified position, watches images for right and left eyes on the screen **124**. Although auxiliary equipment such as eyeglasses is not required in this system, a place where the observer can watch the three-dimensional image is specified, so that the positions of the display device and the observer are limited. Moreover, the observation is made under the condition that an image is divided into two portions, causing a problem of decreased resolution.

A fifth example is a lenticular system as shown in Figure **23** (plan view). According to this system, lenses **127** in a cylindrical shape are provided in front of a screen **126** of a CRT, and due to the operation of the lenses **127**, the screen **126** is divided into images for right and left eyes. However, this system also has problems such as the limitation of an observable place and the number of observers. In addition, in terms of the resolution, alignment precision and pitch precision between the lens and the screen, there are disadvantages to be overcome.

In addition to the above-mentioned five non-time-division three-dimensional display systems, there is a holography system. This system is still in a fundamental study stage, and a TV image is not obtained, so that many technical problems must be overcome in the future.

The conventional projection type liquid crystal display devices are described above. The summary of these devices are follows:

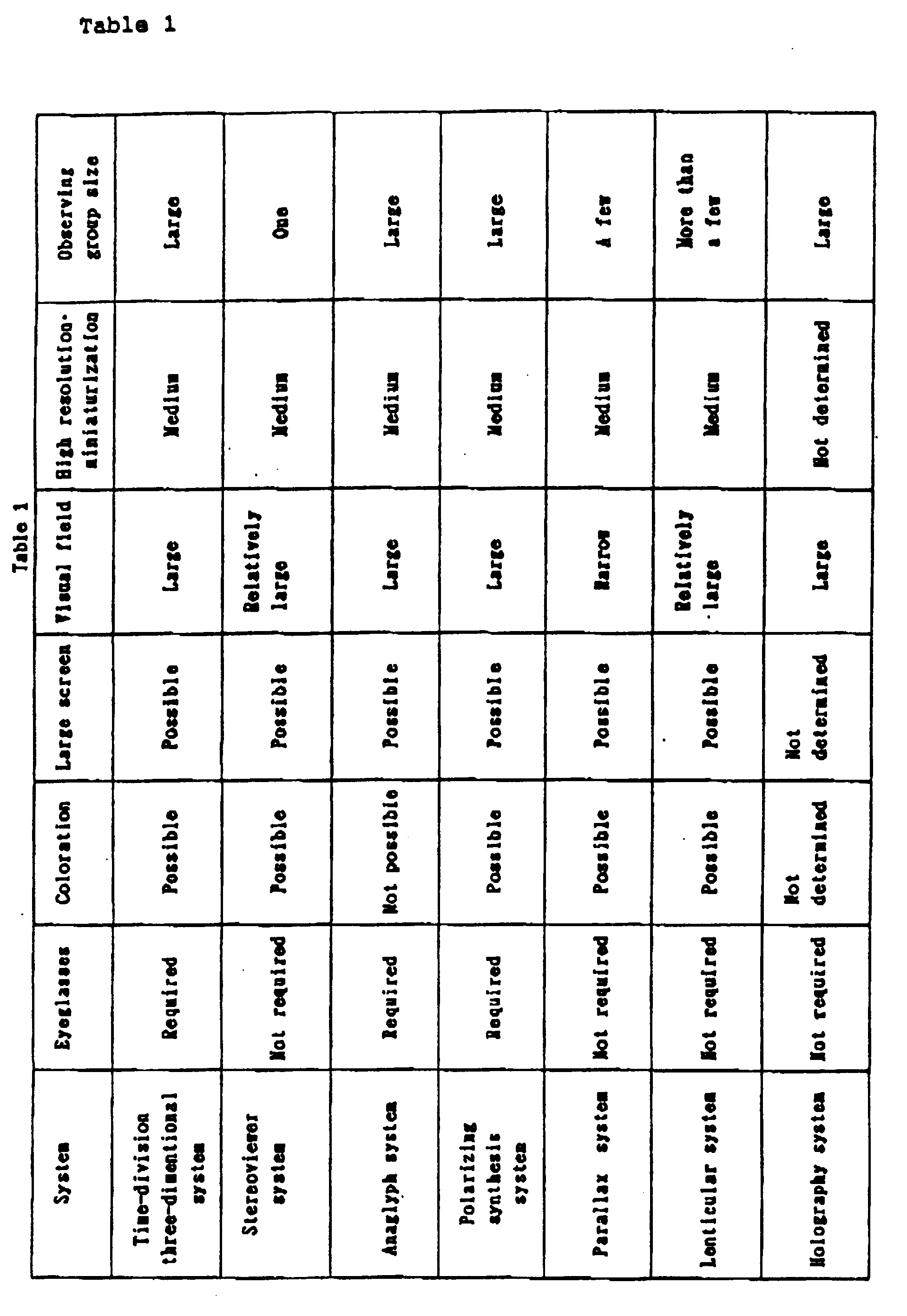

As is understood from Table 1, no conventional methods can satisfy all of the conditions such as coloration, no limitation of a visual field, high resolution and miniaturization, and observation by a large number of people.

In addition, the conventional systems adopt the CRTs, the weight and size of which are inferior to those of LCDs (liquid crystal displays), and moreover, the conventional system is influenced by a geomagnetism when a high precision display is performed. On the other hand, examples using the LCDs instead of the CRTs have been reported; however, the use of conventional LCDs does not improve resolution and causes problems in that panels are made large.

A first aspect of the invention provides a two-dimensional display system comprising: an optical source; a liquid crystal display element upon which light is incident from the optical source and which contains liquid crystal; a driving means for alternately driving the liquid crystal display element to display an image for a right eye and an image for a left eye at alternate timing; a light modulator upon which the light is incident from the liquid crystal display element and which provides a first polarized light used for the image for the right eye and provides a second polarized light used for the image for the left eye, the first and second polarized lights having different plane polarizations or having different circular polarizations; a screen on which the polarized lights emitted from the light modulator are projected; and eyeglasses used for watching the screen, at least having a first polarizing plate for watching the first polarized light for the right eye and a second polarizing plate for watching the second polarized light for the left eye;
characterised in that the liquid crystal in the liquid crystal display element is disposed between two substrates which face each other; and in that the driving means comprises a signal scanning portion which outputs a driving signal for driving the liquid crystal display element; two signal storing means provided on an output side of the signal scanning portion; a first switching means which alternately connects the signal scanning portion to one of the two signal storing means; a pixel driving portion which receives and transfers the driving signal from one of the signal storing means to a pixel; and a second switching means (SW2) which connects the pixel driving portion to the signal storing means not connected to the signal scanning portion.

A second aspect of the present invention provides a three-dimensional display system comprising: an optical source; a polarizing means upon which light is incident from the optical source and which provides a first polarized light used for an image for a right eye and provides a second polarized light used for an image for a left eye, the first and second polarized light having different plane polarizations or having different circular polarizations; a first liquid crystal display element which is provided in a travelling direction of the first polarized light from the polarizing means and which emits first incident light from the polarizing means as light having the image for the right eye, thereby emitting the first incident light to the polarizing means; a second liquid crystal display element which is provided in a travelling direction of the second polarized light from the polarizing means and which emits second incident light from the polarizing means as light having the image for the left eye, thereby emitting the second incident light to the polarizing means; a driving means for driving the first and second liquid crystal display elements to simultaneously display the image for the right eye and the image for the left eye; a screen on which the lights emitted from the first and second light liquid crystal display elements are projected; and eyeglasses used for watching the screen, at least having a first polarizing plate for watching the first polarized light for the right eye and a second polarizing plate for watching the second polarized light for the left eye;
characterised in that the driving means comprises a signal scanning portion which outputs a driving signal for driving the liquid crystal display element; two signal storing means provided on an output side of the signal scanning portion; a first switching means which alternately connects the signal scanning portion to one of the two signal storing means; a pixel driving portion which receives and transfers the driving signal from one of the signal storing means to pixels; and a second switching means which connects the pixel driving portion to the signal storing means not connected to the signal scanning portion.

Preferred features of the invention are set out in claims 2 to 17 and claim 19 to 30.

According to the present invention, image components for a right eye and image components for a left eye are alternately displayed by the liquid crystal display element at alternate timing, and the light modulator modulates light which is incident upon the liquid crystal display element to a polarized light for a right eye having a first direction and a polarized light for a left eye having a second direction. The first and second directions are different from each other. The polarized lights emitted from the light modulator are projected on the screen, and the displayed image is caught by the eyeglasses having a polarizing plate for watching the polarized light having the first direction for a right eye and a polarizing plate for watching the polarized light having the second direction for a left eye.

Since the image for a right eye and that for a left eye are formed so as to be adapted for the binocular parallax, an object and the like can be observed three-dimensionally.

According to the present invention, of the light emitted from the optical source, the S-polarized light component reflected from a slope of the polarization beam splitter which is one of the polarizing means returns to the polarization beam splitter through the first liquid crystal display element. Here, the light transmitted through pixels which are not optically modulated in the first liquid crystal display element returns toward the optical source; however, the light transmitted through pixels which are optically modulated has a P-polarized light component and is emitted toward the screen after passing through the slope of the splitter. On the other hand, Of the light emitted from the optical source, the P-polarized light component transmitted through the slope of the polarization beam splitter which is one of the polarizing means returns to the polarization beam splitter through the first liquid crystal display element. Here, the light transmitted through pixels which are not optically modulated in the first liquid crystal display element returns toward the optical source; however, the light transmitted through pixels which are optically modulated has an S-polarized light component and is emitted toward the screen after being reflected from the slope of the splitter.

That is, image components of the first and second liquid crystal display elements are polarized and emitted to the screen, each direction being different by 90°. The image components for a right eye and for a left eye are displayed by each liquid crystal element, and an object and the like can three-dimensionally be perceived by catching the image displayed on the screen with eyeglasses formed of the polarizing plates.

According to the present invention, almost all of the light which is incident upon the polarizing means, which divide unpolarized light into polarized lights with different directions, such as a polarization beam splitter, a mirror, and the like can be emitted having image information for right and left eyes, so that an image to be three-dimensionally displayed becomes bright without flickering. In addition, the use of the liquid crystal display device prevents the formation of an image from being adversely influenced by a geomagnetism. Moreover, a color display can be performed by providing a light selection means, a color filter, a mechanical R.G.B. rotary filter or the like in the liquid crystal display element, resulting in easy coloration. Furthermore, an observer can watch an image displayed on the screen, so that the visual field is not limited and a number of people can observe the image. The use of a circuit with a memory property and the application of the IC microprocessing technique enable the improvement of resolution, leading to the miniaturization of the three-dimensional display system.

Thus, the invention described herein makes possible the advantages of (1) providing a three-dimensional display system in which the formation of an image is not adversely influenced by a geomagnetism, coloration is made possible, a visual field is not limited, high resolution and miniaturization are achieved, and the observation by a number of people is made possible; and (2) providing a three-dimensional display system in which a clear image can be obtained, in addition to the characteristics of (1).

These and other advantages of the present invention will become apparent to those skilled in the art upon reading and understanding the following detailed description with reference to the accompanying figures.

### BRIEF DESCRIPTION OF THE DRAWINGS

Figure **1** is a schematic view showing a three-dimensional display system of Example 1.

Figure **2** is a cross-sectional view showing a liquid crystal display together with an electric circuit.

Figure **3** is a time chart regarding an applied voltage together with the kind of transmitted light.

Figure **4** is a block diagram showing a driving circuit.

Figure **5** is a time chart regarding a scanning period, etc. together with the kind of transmitted light.

Figure **6** is a schematic view showing a light modulator.

Figure **7a** is a cross-sectional view showing a liquid crystal panel provided to the optical modulator of Figure **6**.

Figure **7b** is a view illustrating the polarizing operation of the liquid crystal panel.

Figure **8** is a schematic view showing a three-dimensional display system of Example 2.

Figure **9** is a schematic view showing a light generation device preferred for Example 2.

Figure **10** is a schematic view showing a light generation device preferred for Example 2.

Figure **11** is a perspective view showing a mechanical R.G.B. rotary filter.

Figure **12** is a schematic view showing a three-dimensional display system of Example 3.

Figure **13** is a time chart regarding an applied voltage together with the kind of transmitted light.

Figure **14** is a cross-sectional view showing a liquid crystal display element in which a color filter is integrated.

Figure **15** is a perspective view showing a liquid crystal display element in which a frame memory is provided.

Figures **16a** and **16b** are views illustrating a principle of a three-dimensional display system.

Figure **17** is a schematic view showing a conventional three-dimensional display system.

Figures **18a** and **18b** are schematic views illustrating an operation of polarizing eyeglasses provided in the three-dimensional display system of Figure **17**.

Figures **19a** and **19b** are schematic views showing another conventional three-dimensional display system.

Figure **20** is a schematic view showing still another conventional three-dimensional display system.

Figure **21** is a schematic view showing still another conventional three-dimensional display system.

Figure **22** is a schematic view showing still another conventional three-dimensional display system.

Figure **23** is a schematic view showing still another conventional three-dimensional display system.

### DESCRIPTION OF THE PREFERRED EMBODIMENTS

Hereinafter, the present invention will be described by way of illustrating examples with reference to the drawings.

### Example 1

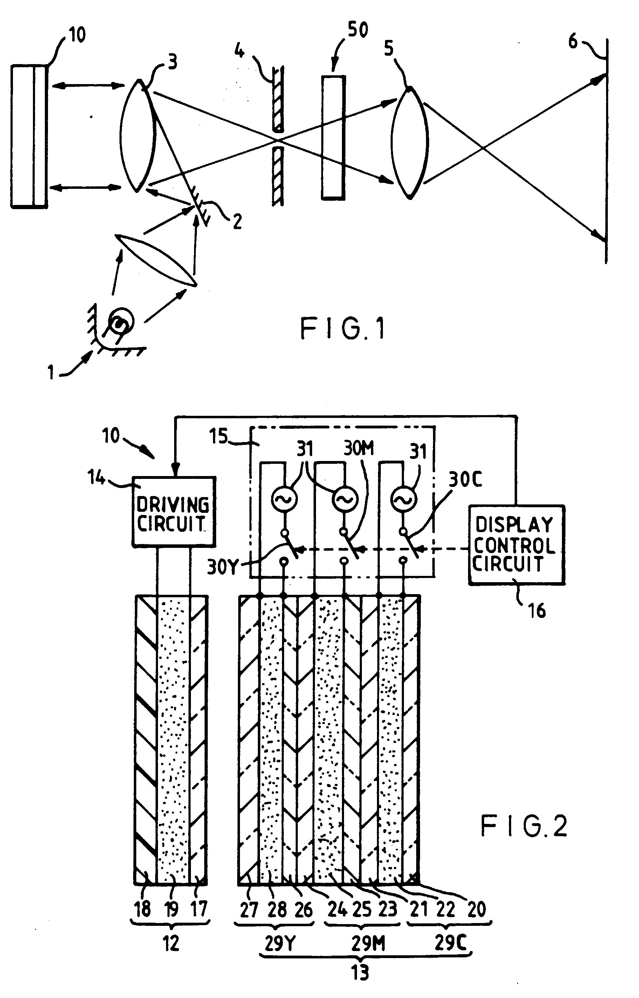

Figure **1** shows a three-dimensional display system of the present example. This system comprises an optical source **1**, a reflection type liquid crystal display **10**, an optical modulator **50**, a screen **6**, and polarizing eyeglasses (not shown). Light emitted from the optical source **1** is directed to the liquid crystal display **10** through a mirror **2** and the lens **3**. Then, the light reflected from the liquid crystal display **10** is directed to the optical modulator **50** through the lens **3** and a shade filter **4** with a slit. The light transmitted through the optical modulator **50** is irradiated to the screen **6** through a projection lens **5**. An observer watches an image formed on the screen, wearing the polarizing eyeglasses.

As shown in Figure **2**, the liquid crystal display **10** includes a reflection type liquid crystal display element **12**, a light selection panel **13** disposed on the reflection type liquid crystal display element **12**, a driving circuit **14** for driving the reflection type liquid crystal display element **12**, a filter driving circuit **15** for driving the light selection panel **13**, and a display control circuit **16** for regulating the driving circuit **14** and the filter driving circuit **15**, respectively so that a desired image with desired color can be displayed on the liquid crystal display **10**.

The reflection type liquid crystal display element **12** is an active matrix type and uses a liquid crystal display mode requiring no polarizing plate, e.g., a polymer dispersion type liquid crystal display mode. Moreover, the reflection type liquid crystal display element **12** includes a transparent substrate **17** and an active matrix substrate **18** on which a light reflection panel for reflecting light which is incident upon the transparent substrate **17**. The transparent substrate **17** and the active matrix substrate **18** are disposed so as to face each other, and liquid crystal **19** is inserted therebetween. One common electrode is formed over almost an entire surface of the transparent substrate **17**, which faces the active matrix substrate **18**, and a plurality of display electrodes are formed in a matrix on a surface of the active matrix substrate **18**, which faces the transparent substrate **17**. Regions where the respective electrodes overlap each other become display regions (pixels). In the reflection type liquid crystal display element **12**, a driving voltage is applied between the common electrode and the display electrodes by the driving circuit **14**, whereby a predetermined display is performed. The driving circuit **14** is regulated with a display control signal transmitted from the display control circuit **16**. The display control signal has an image signal for a right eye and an image signal for a left eye for each frame, and each image signal for right and left eyes has red, green, and blue components. Because of this, the reflection type liquid crystal display element **12** displays an image for a right eye having red, green, and blue components, and an image for a left eye having red, green, and blue components for each frame. That is, the display control signal having six different components is displayed per frame.

The light selection panel **13** provides color to the six kinds of components displayed by the reflection type liquid crystal display element **12**. The light selection panel **13** includes a cyanide filter **29C**, a magenta filter **29M**, a yellow filter **29Y**, which are disposed in this order, and is positioned on the side of the transparent substrate **17**. The cyanide filter **29C** includes a pair of transparent substrates **20** and **21** facing each other, and a transparent electrode (not shown) is formed on each inside surface of the transparent substrates **20** and **21**. Liquid crystal **22** containing a dichroic dye of a cyanide (described later) is inserted between the transparent substrates **20** and **21**. The magenta filter **29M** includes a pair of transparent substrates **23** and **24** facing each other, and a transparent electrode (not shown) is formed on each inside surface of the transparent substrates **23** and **24**. Liquid crystal **25** containing a dichroic dye of a Magenta (described later) is inserted between the transparent substrates **23** and **24**. The yellow filter **29Y** includes a pair of transparent substrates **26** and **27** facing each other, and a transparent electrode (not shown) is formed on each inside surface of the transparent substrates **26** and **27**. Liquid crystal **28** containing a dichroic yellow die (described later) is inserted between the transparent substrates **26** and **27**.

The cyanide filter **29C**, the magenta filter **29M**, and the yellow filter **29Y** are applied with an AC voltage from an AC power source via switching circuits **30C**, **30M**, and **30Y**, respectively. The switching circuits **30C**, **30M**, and **30Y** selectively apply an AC voltage to the cyanide filter **29C**, the magenta filter **29M**, and the yellow filter **29Y** based on a switching signal from the display control circuit **16**, thereby driving each filter. As described above, the on/off of each filter is regulated, whereby light with either one of three primary colors, i.e., red, green, or blue can be incident upon the reflection type liquid crystal display element **12**. Table 2 shows a relationship between the driving state of each filter and the color of the incident light.

**Table 2**

| Driving state | | | Color of incident light |
|---|---|---|---|
| 29C | 29M | 29Y | |
| ON | OFF | OFF | Red |
| OFF | ON | OFF | Green |
| OFF | OFF | ON | Blue |

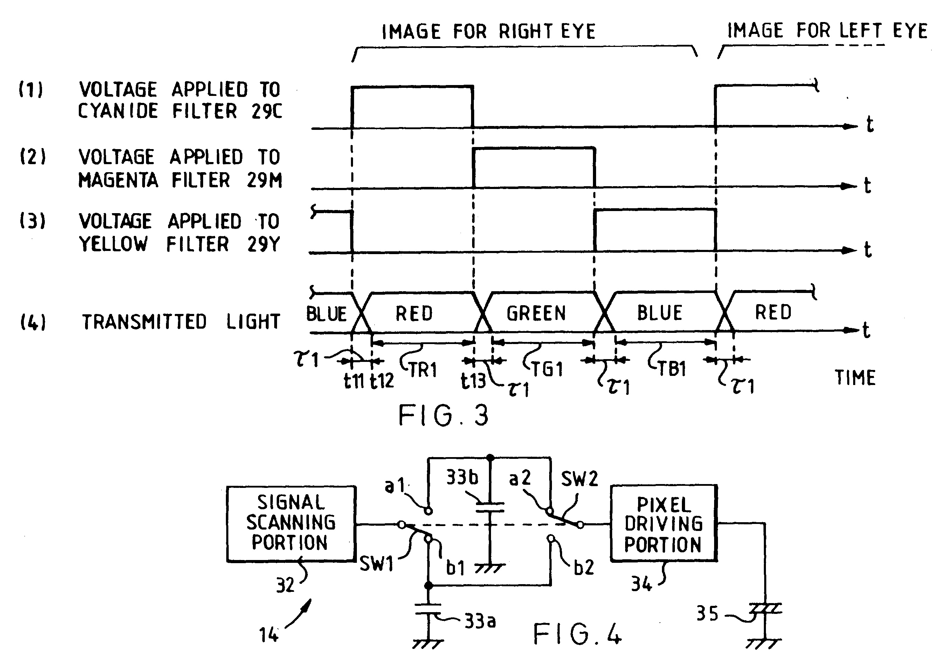

Figure **3** is a time chart showing a fundamental operation of the light selection panel **13**. The cyanide filter **29C** is applied with a voltage from **t11** to **t13**. The orientation of liquid crystal molecules are not immediately changed by being applied with a voltage and a predetermined transition period **τ1** is required. The transition period **τ1** corresponds to a response recovery speed with respect to an electrical field of the liquid crystal molecules. Thus, even though the application of the voltage starts at **t11**, it is not until **t12** that actually, the cyanide filter **29C** responds to the voltage, and the orientation of the liquid crystal molecules become stable. Accordingly, the light transmitted through the light selection panel **13** becomes red during **TR1** (from **t12** to **t13**).

In the same way as the above, a voltage is repeatedly applied to the magenta filter **29M**, the yellow filter **29Y**, and the cyanide filter **29C**, respectively in this order, whereby each light transmitted through the light selection panel **13** becomes green, blue, and red. At this time, a red component, a green component, and a blue component (left side of Figure **3**) are given to an image for a right eye, and subsequent red, green, and blue components are given to an image for a left eye.

The structure of the light selection panel **13** is not limited to the present example. As long as any color can be converted to a desired one at high speed, any structure is applicable: e.g., three kinds of liquid crystal containing red, blue, and green dichroic dyes, a laminate of color polarizing plates and liquid crystal panels, and a laminate of neutral gray polarizing plates and liquid crystal panels.

Figure **4** is a circuit diagram showing a fundamental structure of the driving circuit **14**. The driving circuit **14** has capacitors **33a** and **33b** for storing a driving signal from a signal scanning portion **32**. In addition, the driving circuit **14** has a switch **SW1**, by which the driving signal from the signal scanning portion **32** is switched to be supplied to the capacitor **33a** or **33b**; and the driving circuit **14** has a switch **SW2**, by which the driving signal stored at the capacitor **33a** or **33b** is switched to be supplied to a pixel driving portion **34**. The driving circuit **14** is partially or entirely built in the active matrix substrate **18**.

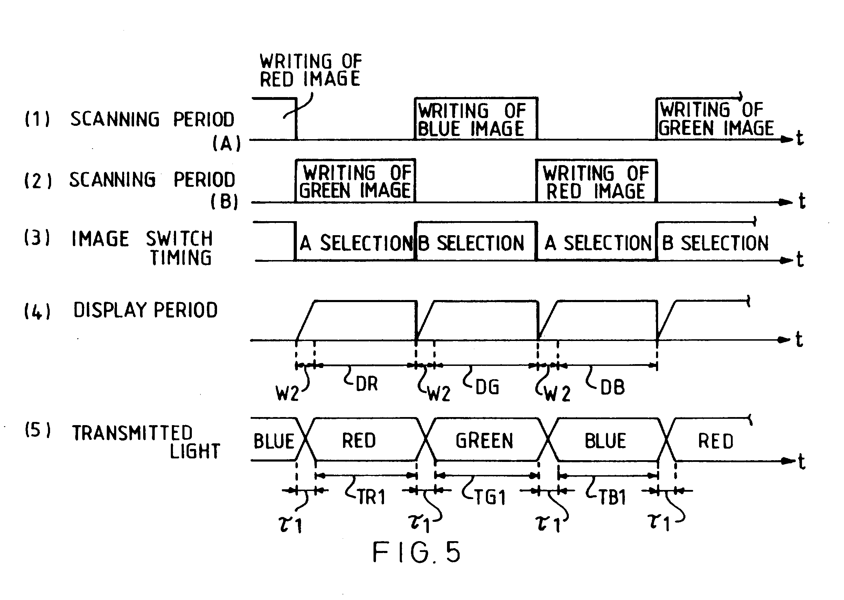

The driving circuit **14** writes a driving signal for a subsequent image, while a desired display is performed. The operation of the driving circuit **14** will be described in detail with reference to Figures **4** and **5**. While each liquid crystal (pixel) **35** is driven by the driving signal stored in the capacitor **33b**, a driving signal for a subsequent image, which is transmitted from the signal scanning portion **32** through the switch **SW1**, is stored in the capacitor **33a**. Such an operation is conducted with respect to each liquid crystal. After the driving signal is taken in the driving circuit **14**, the switch **SW1** is switched to a terminal **a1** and the switch **SW2** is switched to a terminal **b2** at appropriate timing. Because of the switching of the switches **SW1** and **SW2**, an image of the reflection type liquid crystal display element **12** is immediately changed into a subsequent image. After that, a driving signal for a further subsequent image is stored in the capacitor **33b**, whereby the driving signal is taken in the driving circuit **14.** The above-mentioned operation is repeated and the switch timing of an image, i.e.; switch timing of the switches **SW1** and **SW2** is synchronized with the color-change timing of the light selection panel **13**, whereby a color display is made possible. Moreover, at this time, as shown in Figure **3**, one cycle of change in color (red → green → blue) is performed with respect to an image for a right eye and an image for a left eye. For example, first, one cycle of change in color is performed with respect to an image for a right eye, and then, one cycle of change in color is performed with respect to an image for a left eye. The same cycle is repeated hereinafter. A period **W2** shown in Figure **5** corresponds to a response characteristic of a display mode applied to the reflection type liquid crystal display element **12**, and it is preferred that the period **W2** is as short as possible.

In the light selection panel **13**, it is possible to avoid mixing two colors (i.e., blue and red, red and green, green and blue) by taking appropriate timing to apply each voltage to the cyanide filter **29C**, the magenta filter **29M**, and the yellow filter **29Y**. Owing to the appropriate timing to apply each voltage, timing to start a period **W2** shown in Figure **5** can properly be designed. Moreover, in the reflection type liquid crystal display element **12**, there is a problem of light reflection on some portions other than the light reflection panel (e.g., a surface of the transparent substrate **17**, a surface of the transparent electrode, and interfaces between various thin films (not shown) formed between the transparent substrate **17** and the active matrix substrate **18**); however, the formation of antireflection films on these portions overcomes this problem and is useful for enhancing contrast characteristics.

Furthermore, there is a problem of response characteristics for each liquid crystal element. Since the lowest limit of frequency at which the eyes of a human being do not feel a flickering of a display is about 30 Hz, in the present example, the allowable time for a display corresponding to each color (red, blue, and green) is about 5 msec. In order to perform a sufficient display within 5 msec, it is required that the respective response time of the light selection panel 13 and the reflection type liquid crystal display element 12 is several msec or less, and under this condition, color modulation and a display are feasible.

The inventors of the present invention considered various liquid crystal display elements in view of the above-mentioned response characteristics; as a result, it was found that a phase change mode to which a dichroic dye is added, a polymer dispersion type liquid crystal display mode, and a ferroelectric liquid crystal display mode are preferred as a liquid crystal display mode.

In the reflection type liquid crystal display element 12 with the above-mentioned structure, as to an image of one frame, image components for a right eye are displayed in the order of red, green, and blue; and then image components for a left eye are displayed in the order of red, green, and blue. This display is repeated, whereby images of a plurality of frames are successively displayed. And then, image information is given to the light modulator 50 by the reflection type liquid crystal display element **12** through the lens **3**. When the image information is given to the light modulator **50**, excess light components are removed by the shade filter **4** provided between the liquid crystal display **10** and the light modulator **50**.

As the light modulator **50**, a modulator, which makes incident light linearly polarized light and switches a polarized direction thereof, for example, between 0° and 90° at high speed, is used. Alternatively, a modulator, which converts the incident light to circularly polarized light and switches a rotated direction thereof to either right or left at high speed. Because of the switching, the polarized direction or the rotated direction of the polarized light of an image for a right eye and the polarized direction or the rotated direction of the polarized light of an image for a left eye can be made different.

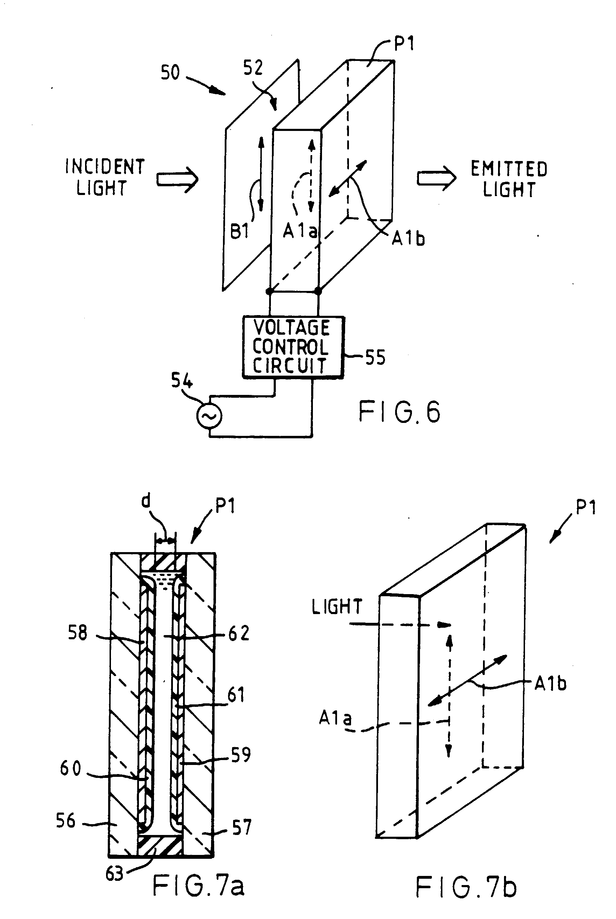

As shown in Figure **6**, the light modulator **50** has a structure in which a polarizing plate **52**, which is not a so-called colored polarizing plate but a neutral gray polarizing plate, and a liquid crystal panel **P1** are layered on top of each other. A voltage control circuit **55** connected to a power source **54** regulates a voltage applied to the liquid crystal panel **P1**.

As shown in Figure **7a**, in the liquid crystal panel **P1**, transparent electrodes **58** and **59** formed of ITO (indium tin oxide) and the like are respectively formed on a pair of glass substrates **56** and **57**. Moreover, the transparent electrodes **58** and **59** are covered with orientation films **60** and **61** formed from polyvinyl alcohol and the like. Liquid crystal **62** such as TN liquid crystal is inserted between the orientation films **60** and **61** so as to have a thickness of **d** determined as described later, and its periphery was sealed with a sealing material **63**. The orientation films **60** and **61** are subjected to an orientation treatment such as a rubbing treatment.

In the case of TN liquid crystal, as shown in Figure **7b**, orientation directions on a light incident side and on a light emitting side are determined so that they are in an orthogonal relationship with each other, and the orientation directions are shown by arrows **A1a** and **A1b**, respectively. As shown in Figure **6**, the orientation direction **A1a** of the liquid crystal panel **P1** on the light incident side thereof is determined so as to be in parallel with a polarizing direction **B1** of the polarizing plate **52**. The orientation direction **A1b** of the liquid crystal panel **P1** on the light emitting side thereof is determined so as to be rotated by 90° based on the orientation direction **A1a**.

A principle of a three-dimensional display will be described using the structure shown in Figures **6**, **7a** and **7b**. As a material for the liquid crystal **62** sealed in the liquid crystal panel **P1**, a number of examples such as TN liquid crystal and ferro-electric liquid crystal can be used. In any case, the following states can be switched to each other, i.e., a state in which the incident light transmitted through the polarizing plate **52** is rotated by 90° in the liquid crystal panel **P1** and emitted as linearly polarized light; and a state in which the incident light transmitted through the polarizing plate **52** is emitted from the liquid crystal panel **P1** without being rotated therein. In the present example liquid crystal is used, however, crystal materials having birefringence such as PLZT and BSO (Bi₁₂SiO₂₀) can be used.

In the liquid crystal panel **P1**, for example, under the condition that a working voltage is not applied (hereinafter, referred to as an OFF state), the incident light is rotated by 90°, and under the condition that a working voltage is applied (hereinafter, referred to as an ON state), the incident light is not polarized. It is also possible that in the OFF state, the incident light is not polarized, and in the ON state, the incident light is rotated by 90°.

When the liquid crystal panel **P1** is in the OFF state, each light (having a red, green, or blue component) is transmitted through the polarizing plate **52** in the polarizing direction **B1** and rotated by 90° in the liquid crystal panel **P1** to be emitted therefrom as light polarized in the polarizing direction **A1b**. In contrast, when the liquid crystal panel **P1** is in the ON state, each light (having a red, green, or blue component) is transmitted through the polarizing plate **52** in the polarizing direction **B1** and then is transmitted through the liquid crystal panel **P1** without being polarized therein, resulting in polarized light in the polarizing direction **A1a**. At this time, an image of each color for a right eye is rotated by 90° and an image of each color for a left eye is not rotated. Here, the image which is rotated by 90° can be set for a left eye, and the image which is not rotated can be set for a right eye.

As described above, an image for a right eye and an image for a left eye can alternately be displayed on the screen **6** by appropriately setting the liquid crystal panel **P1** in the ON state or in the OFF state.

An observer watches the image displayed on the screen in this way, wearing polarizing eyeglasses (not shown). The polarizing eyeglasses have a polarizing plate for a right eye and a polarizing plate for a left eye, each polarizing direction being different. For example, the polarizing plate for a right eye transmits light polarized in the polarizing direction **A1b**, and the polarizing plate for a left eye transmits light polarized in the polarizing direction **A1a**. Because of this, the observer wearing the polarizing eyeglasses can watch an object three-dimensionally.

The polarized angle can be more than 0° and less than 180° instead of 90° as long as an image for a right eye and that for a left eye can readily be recognized. It is preferred that the angle is in the range of 45° to 135°. In the case where light which is incident upon the eyeglasses is circularly polarized light, circularly polarized light for a right eye and that for a left eye are respectively converted to linearly polarized lights by phase plates, each polarizing direction being different by 90°. The combination of the phase plates and the polarizing plates provide shutter effects of light. That is, the eye-glasses have the phase plates and the polarizing plates.

Thus, in the three-dimensional display system constituted as described above, the use of the liquid crystal display **10** prevents the formation of an image from being adversely influenced by a geomagnetism. Moreover, in the present example, the light selection panel **13** is provided on the light incident side of the reflection type liquid crystal display element **12**, whereby a color display can be performed and coloration can readily be achieved. In addition, since observers can watch an image displayed on the screen, there is no limit to the visual field and a number of people can watch together. Furthermore, the use of the above-mentioned liquid crystal can prevent flickering, leading to improved resolution. The improved resolution can realize the miniaturization of the three-dimensional display system.

As liquid crystal used for the liquid crystal display **10** and the liquid crystal panel **P1**, polymer dispersion type liquid crystal is preferred. For example, when the polymer dispersion type liquid crystal is inserted into the liquid crystal panel **P1** without sealing, a joint portion of the liquid crystal panel **P1** is not shown, leading to improved quality. The polymer dispersion type liquid crystal is obtained, for example, in the following manners: liquid crystal is microcapsulated; a polymerizable compound is hardened by the irradiation of UV (ultraviolet rays), heating, etc. and a homogeneous solution containing liquid crystal and the hardened compound is prepared; a common solvent is evaporated from a solution containing liquid crystal, a polymer, and the common solvent; a solution containing liquid crystal and a thermoplastic resin is melted, followed by being cooled; a sponge-like cellulose film or glass particles with a micron size are impregnated with liquid crystal. As an example for producing the liquid crystal panel **P1**, a photo polymerization initiating agent is homogeneously mixed in a solution of 2-ethylhexyl acrylate monomer : urethaneacrylate oligomer : ZLI-1840 (manufactured by Merck Co., Ltd.) = 16 : 24 : 60, and the mixture so obtained is sealed in the panel, followed by UV irradiation.

### Example 2

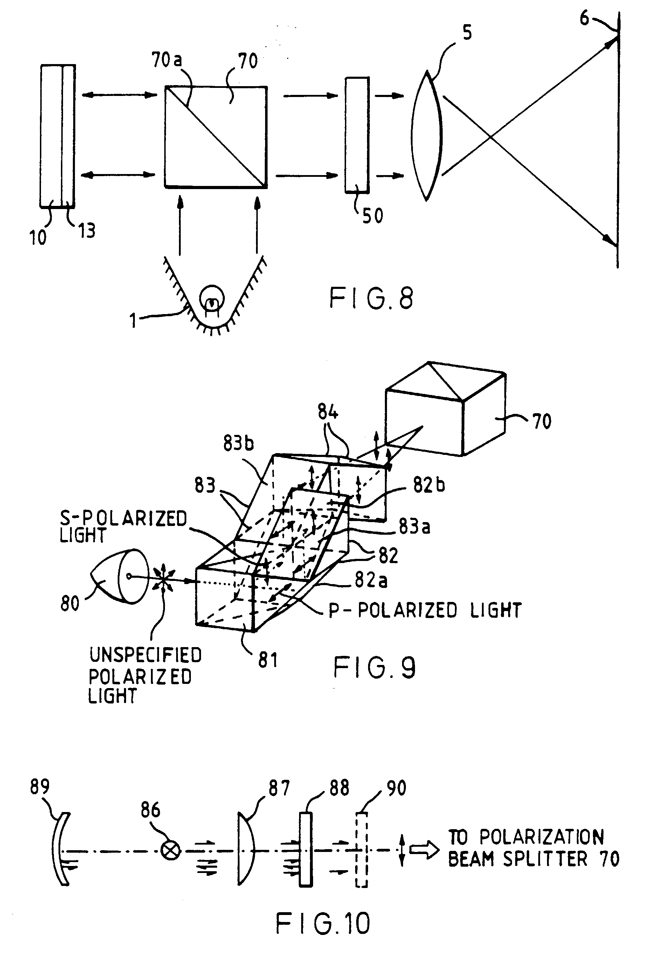

Figure **8** shows another example of the present invention. The three-dimensional display system of the present example has a structure in which light from an optical source **1** is provided to the liquid crystal display **10** through a polarization beam splitter **70**, and the light reflected from the liquid crystal display **10** is transmitted through the polarization beam splitter **70** to be given to the light modulator **50**. In Figure **8**, the same portions as those of Figure **1** are marked with the same reference numerals as those of Figure **1**.

In this system, the polarization beam splitter **70** including the combination of two prisms is used. The reason for the use of this type of prism is as follows: when a display mode using polarized light (e.g., a ferroelectric liquid crystal TN mode, an HFE mode, a phase change mode, a guest-host mode, a polymer dispersion type liquid crystal display mode, a homogeneous type liquid crystal display mode, an antiferroelectric electric liquid crystal display mode, and an liquid crystal display mode) is used for the reflection type liquid crystal display element **12**, the prism described above can be adapted to this type of mode. That is, when ferroelectric liquid crystal and the like is used in the reflection type liquid crystal display element **12**, it is required to polarizing light on the light incident side and/or on the light emitting side of the liquid crystal display element **12**. The use of the above-mentioned type of prism makes possible the polarization both on the light incident side and on the light emitting side of the liquid crystal display element **12**. Instead of the polarization beam splitter 70, for example, a mirror which divides unpolarized light into an S-polarized light and a P-polarized light can be used.

Light irradiated from the optical source **1** to the polarization beam splitter **70** is partially reflected from a slope **70a** of the polarization beam splitter **70**, and the reflected light is polarized light with a predetermined polarized direction and is incident upon the liquid crystal display **10**. The light incident upon the liquid crystal display **10** becomes light having red, green, and blue components as predetermined image information, due to the same operations as those of the light selection panel **13** and the reflection type liquid crystal display element **12** of Example 1. Then, this light is emitted toward the polarization beam splitter **70**.

The light transmitted through the polarization beam splitter **70** is given to the light modulator **50** and treated in the same way as in Example 1. More specifically, the light having each color component for a right eye is rotated by 90° and the light having each color component for a left eye is not rotated. The resulting polarized light is projected on the screen **6** after passing through the projection lens **5**. When an observer watches the displayed image, wearing the same polarizing eyeglasses as those of Example 1, a three-dimensional object can be observed.

In the present example, since only half of the light which is incident upon the polarization beam splitter **70** is given to the reflection type liquid crystal display element **12**, an image tends to be darkened. In order to overcome this problem, for example, a light generation device as shown in Figures **9** and **10** can be used.

In the case of the light generation device of Figure **9**, unspecified polarized light from the optical source **80** is divided into two linearly polarized components (i.e., a P-polarized light and an S-polarized light), each polarized direction being crossed with each other by a polarizing beam splitter **81**. Of the two components, one polarized component which is absorbed by the polarizing plate is passed through a first prism **82** in which two rectangular prisms are combined so that each slope forms an angle of 90°, and another polarized component is passed through a second prism **83** in which two rectangular prisms are combined so that each slope is in parallel with the other. In the case where the polarized component which is absorbed is, for example, a P-polarized light, after the P-polarized light is entirely reflected from a slope **82a** of the first prism **82** without being rotated, it is rotated by 90° at a slope **82b** and is entirely reflected therefrom, whereby the direction of the P-polarized light is rotated by 90°. Because of this, the direction of the P-polarized light becomes equal to that of an S-polarized light. On the other hand, the S-polarized light is rotated by 90° at a slope **83a** and a slope **83b** of the second prism **83**, respectively and is entirely reflected therefrom, so that a direction of the S-polarized light is rotated by 180°. As a result, the S-polarized light is emitted from the second prism **83** without changing its polarized direction. After that, the two components are refracted by a synthetic prism **84** and synthesized on the polarization beam splitter **70**. In the light generation device, linearly polarized light can effectively be obtained from the unspecified polarized light of the optical source, so that optical efficiency is improved, making possible the three-dimensional display in a bright state.

In the case of the light generation device of Figure **10**, light generated from an optical source **86** is provided to an optical filter **88** through a lens **87**. At this time, for example, when the following design is made: light polarized in a counterclockwise direction is transmitted through the optical filter **88** and light polarized in a clockwise direction is reflected from the optical filter **88**; the reflected light moves to a concave mirror **89** which is disposed on the opposite side of the lens **87** with respect to the optical source **86**. Then the light is reflected from the concave mirror **89** to become light in a counterclock direction, and is transmitted through the optical filter **88**. After that, if the light is transmitted through a λ/**4** plate **90**, the all of the light from the optical source **86** is made linearly polarized light. Light efficiency can be improved by making this light incident upon the polarization beam splitter **70**.

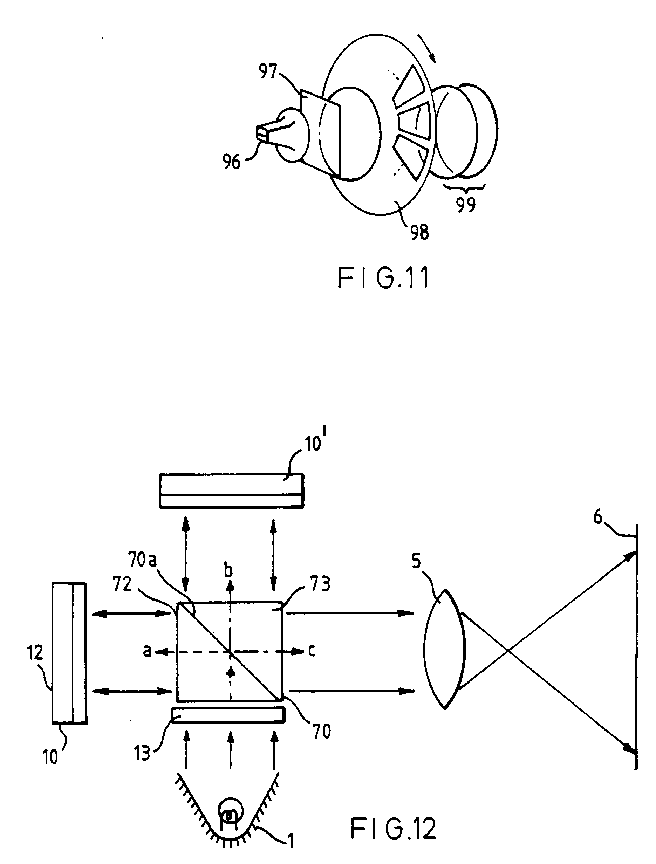

In Examples 1 and 2, the light selection panel **13** for forming a color image is disposed in front of the reflection type liquid crystal display element **12**, there is no special limit to the place where the light selection panel **13** is disposed as long as it is between the optical source and the screen. Moreover, a structure shown in Figure **11** can be used instead of the light selection panel **13**. According to the structure in Figure **11**, light generated from an optical source **96** is transmitted through a UV-cut filter **97**, whereby the UV-rays are removed. The light from which the UV-rays are removed is transmitted through a mechanical R.G.B. rotary filter **98** to be colored light, and the resulting light is transmitted through a lens **99** to be emitted therefrom. In the above-mentioned two cases (i.e., the structures in Examples 1 and 2, and the structure in Figure **1**), a color display can readily be performed.

A color display is also made possible in a structure in which a color microfilter is provided on each pixel by dyeing, electrodeposition, printing, etc. In this case, the light selection panel **13** is not required. More specifically, instead of successively displaying red, green, and blue components by the reflection type liquid crystal display element **12** while an image for a right or a left eye is projected on the screen **6**, a color signal corresponding to each pixel is simultaneously transmitted while an image for a right or a left eye is projected on the screen **6**. Thus, in this system, the response speed required for the liquid crystal display element **12** can be three times slower than that in the case where the light selection panel **13** is required. Accordingly, as a display mode to be used, usual twisted nematic liquid crystal can be used, resulting in wide selection for the display mode.

### Example 3

Another example of the three-dimensional display system of the present invention is shown in Figure **12**. The same portions as those of Figure **8** are marked with the same reference numerals as those of Figure **8**. This system includes the optical source 1 for generating white light and the polarization beam splitter **70** upon which the light from the optical source **1** is incident. Instead of the polarization beam splitter **70**, any optical materials (e.g., a mirror) which can divide unpolarized light into an S-polarized light and a P-polarized light can be used. The polarization beam splitter **70** is constituted by two prisms **72** and **73** which are combined so that each slope faces each other. Light generated from the optical source **1** is transmitted through the light selection panel **13** and incident upon the polarization beam splitter **70**. After that, the light is partially reflected from the slope **70a** to become reflected light a (S-polarized light) and the remaining polarized light (P-polarized light) is transmitted through the slope **70a** to become transmitted light **b**.

For a light traveling direction of the reflected light **a** and for a light traveling direction of the transmitted light **b**, reflection type liquid crystal displays **10** and **10'** are provided, respectively. The respective lights reflected from the liquid crystal displays **10** and **10'** are incident upon the polarization beam splitter **70** and joined together. The joined light **c** which is optically modulated is passed through the projection lens **5** and is projected on the screen 6. The image displayed on the screen **6** is caught by polarizing eyeglasses (not shown).

The liquid crystal displays **10** and**10'** have the same structures, and these structures are also the same as that of the liquid crystal display **10** in Figure **2**. Hereinafter, the operation of the liquid crystal display **10** will be described.

In the present example, a display mode of the reflection type liquid crystal display element in the liquid crystal display **10** is a liquid crystal display mode using a polarizing plate. As liquid crystal, TN-liquid crystal, for example, having a 45° twisted orientation. For each frame, an image with red, green, and blue components for a right eye or a left eye is displayed by the reflection type liquid crystal display element **12**. That is, three kinds of image components are displayed per one frame.

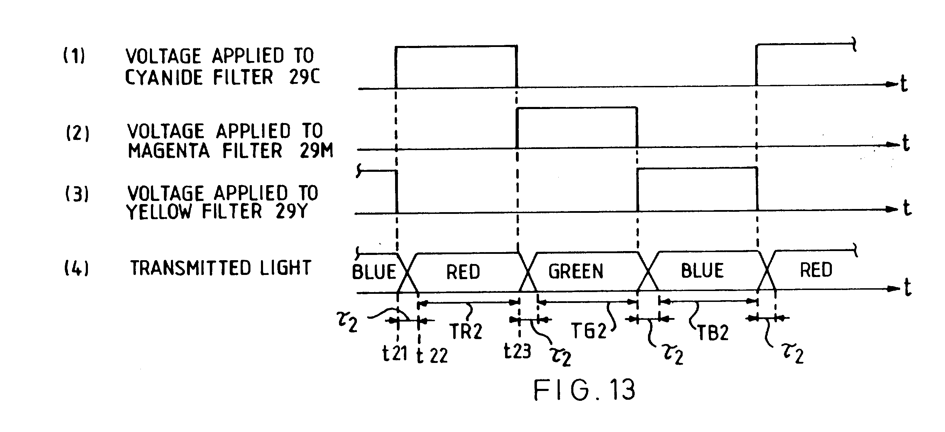

Figure **13** shows a time chart showing a fundamental operation of the light selection panel **13**. The cyanide filter **29C** is applied with a voltage from **t21** to **t23**. The orientation of liquid crystal molecules are not immediately changed by being applied with a voltage and a predetermined transition period **τ2** is required. The transition period **τ2** corresponds to the response recovery speed with respect to an electrical field of the liquid crystal molecules. Thus, even though the application of the voltage starts at **t21**, it is not until **t22** that actually, the cyanide filter **29C** responds to the voltage, and the orientation of the liquid crystal molecules become stable. Accordingly, the light transmitted through the light selection panel **13** becomes red during **TR2** (from **t22** to **t23**).

In the same way as the above, a voltage is repeatedly applied to the magenta filter **29M**, the yellow filter **29Y**, and the cyanide filter **29C**, respectively in this order, whereby each light transmitted through the light selection panel **13** becomes green, blue, and red. The structure of the light selection panel **13** is not limited to the present example. As long as color can be converted into the desired one at high speed, any structure is applicable: e.g., three kinds of liquid crystal containing red, blue, and green dichroic dyes, a laminate of color polarizing plates and liquid crystal panels, a laminate of neutral gray polarizing plates and liquid crystal panels, and the mechanical rotary filter shown in Figure **11**. Moreover, the light selection panel **13** can be positioned in any place as long as it is between the optical source **1** and the projection lens **5**. However, if it is between the liquid crystal display **10** and the polarization beam splitter **70**, two light selection panel **13** are required for the respective liquid crystal displays **10** and **10'**.

In the present example, there is also a problem of response characteristics of each liquid crystal element. The allowable time for a display corresponding to each color (red, blue, and green) under the condition that the eyes of a human being do not feel flickering is about 10 msec. In order to perform a sufficient display within 10 msec, it is required that the respective response time of the light selection panel **13** and the reflection type liquid crystal display element **12** is several msec or less, and that color modulation and display are feasible.

The inventors of the present invention considered various liquid crystal display elements in view of the above-mentioned response characteristics; as a result, it was found that a phase change mode to which a dichroic dye is added, a polymer dispersion type liquid crystal display mode, a high-speed responsive type TN mode (e.g., dual frequency type liquid crystal display mode), a homogeneous type nematic liquid crystal display mode, and a ferroelectric liquid crystal display mode are preferred as a liquid crystal display mode.

In the reflection type liquid crystal display element **12** with the above-mentioned structure, as to an image of one frame, image components for a left eye are displayed in the order of red, green, and blue. This display is repeated, whereby images of a plurality of frames are successively displayed. And then, image information is given to the polarization beam splitter **70** by the reflection type liquid crystal display element **12**.

The liquid crystal display **10** upon which the reflected light **a** is incident is described in the above. As to the liquid crystal display **10'** upon which the transmitted light **b** is incident, for example, an image for a right eye is displayed, and the same operations as the above are performed. The transmitted light **b** is also incident upon the polarization beam splitter **70** as colored light with image information.

The reflected light **a** and the transmitted light **b**, each having image information, which are incident upon the polarization beam splitter **70** overlap each other on the slope **70a** and their polarized directions are crossed with each other. Under these conditions, the joined light **c** is emitted onto the screen **6** from the polarization beam splitter **70**. Thus, the polarization beam splitter **70** can emit almost all of the light which is incident thereupon as light having image information for both right and left eyes.

The image displayed on the screen **6** as described above is caught by the polarizing eyeglasses (not shown). The polarizing eyeglasses have a polarizing plate for a right eye and that for a left eye, each having a different polarizing direction. For example, the polarized light which is emitted from the liquid crystal display **10'** which presents an image for a right eye is transmitted through the polarizing plate for a right eye. The polarized light which is emitted from the liquid crystal display **10** which present an image for a left eye is transmitted through the polarizing plate for a left eye. Because of this, an observer wearing the polarizing eyeglasses can watch an object three-dimensionally.

The polarized angle can be more than 0° and less than 180° instead of 90° as long as an image for a right eye and that for a left eye can readily be recognized. It is preferred that the angle is in the range of 45° to 135°.

Moreover, the following structure is also possible. A birefringent plate is provided between the polarization beam splitter **70** and the screen **6**, and the respective linearly polarized lights emitted from the liquid crystal displays **10** and **10'** are made circularly polarized lights, each rotated direction being different. Then, the circularly polarized lights thus obtained are projected on the screen **6**. In this case, the eyeglasses are constituted by phase plates and polarizing plates. That is, the circularly polarized lights which are incident upon the eyeglasses are converted to linearly polarized lights (each polarized direction for right and left eyes being different), and are passed through the polarizing plates, whereby an image for a left eye is caught by the left eye and an image for a right eye is caught by the right eye.

As described above, in the three-dimensional display system with the above-mentioned structure, almost all of the light which is incident upon the polarization beam splitter **70** can be emitted therefrom as light having image information for right and left eyes, and a bright image can be displayed on the screen **6**. In addition, the use of the liquid crystal display **10** prevents the formation of an image from being adversely influenced by a geomagnetism. Moreover, the light selection panel **13** is provided on the light incident side as in the present example or on the light emitting side of the reflection type liquid crystal display element **12**, whereby a color display can be performed and coloration can readily be achieved. In addition, since observers can watch an image displayed on the screen, there is no limit to the visual field and a number of people can watch together. Furthermore, the use of the above-mentioned liquid crystal can prevent flickering, leading to improved resolution. The improved resolution can realize the miniaturization of the three-dimensional display system.

As TN liquid crystal having a 45° twisted orientation, used for the liquid crystal displays 10 and **10'**, usual nematic liquid crystal is applicable. In order to obtain high speed of the response, it is required to consider the viscosity of the material. In general, liquid crystal with a size of 35 centipoises (cp) or less exhibits effects for realizing the present invention. It was found from the experience of the inventors of the present invention that liquid crystal with a size of 25 cp or less is more preferred. Examples of the material exhibiting such characteristics include biphenyl compounds, phenylester compounds, cyclohexane compounds, phenylpyrimidine compounds, dioxane compounds, diphenylacetylene compounds, alkenyl compounds, fluorine compounds, and mixtures thereof. The twisted angle of liquid crystal is not limited to 45°. Moreover, as a display mode, any modes which use polarized light can be used. Examples of the display mode include a TN mode, a phase change mode, a guest-host mode, a polymer dispersion type liquid crystal display mode, a homogeneous type liquid crystal display mode, a ferroelectric liquid crystal display mode, an antiferroelectric liquid crystal display mode, an electroclinic liquid crystal display mode.

A color display is also made possible in a structure in which a color microfilter is provided on each pixel by dyeing, electrodeposition, printing, etc. In this case, the light selection panel **13** is not required. More specifically, instead of successively displaying red, green, and blue components by the liquid crystal display **10** or **10'** while an image for a left eye is projected on the screen **6**, a color signal corresponding to each pixel is simultaneously transmitted while an image for a left eye is projected on the screen **6**. Thus, in this system, the response speed required for the reflection type liquid crystal display element **12** can be three times slower than that in the case where the light selection panel **13** is required. Accordingly, as to the display mode and the liquid crystal material, wide selection is made possible because of the reduced limitation of the response speed.

In the above-mentioned three examples, as an active matrix substrate of the reflection type liquid crystal display elements **12** of the liquid crystal displays **10** and **10'**, a substrate made of glass or crystal such as silicon is used. On such a substrate, non-linear elements such as a thin film transistor (TFT) or a diode are formed, and the elements are formed of amorphous silicon and/or polysilicon. In particular, the crystal substrate is desired, since the driving circuit **14** (Figure **2**) can readily be provided behind each pixel. The case in which the color micro-filter and the silicon substrate are combined will be described with reference to Figure **14**. In Figure **14**, switching circuit and memory circuit regions **93** (corresponding to the driving circuit **14**) of liquid crystal **92** are formed on a monosilicon substrate **91**. Here, three pixels are formed as one group. Each electrode **94** which also functions as a reflection film is formed on each switching circuit and memory circuit region **93**, and under this condition, a gelatin film is formed over an entire surface of the monocrystalline silicon substrate **91**. Each upper portion of the gelatin film, which corresponds to the respective three switching circuit and memory circuit regions **93** as one group of pixels is dyed in red, green, and blue. The respective colored portions are made a red color filter **94a**, a green color filter **94b**, and a blue color filter **94c**, and the remaining portions are left as the gelatin film (undyed region **94d**). In Figure **14**, the reference numeral **95** denotes a transparent glass substrate provided so as to face the monocrystalline silicon substrate **91**, and the reference numeral **95a** denotes a transparent counter electrode formed over the entire inner surface of the substrate 95.

Moreover, the liquid crystal display element can have a structure in which a frame memory is built as shown in Figure 15. More specifically, a liquid crystal display portion 72 is formed at the center region on a monocrystalline silicon substrate 71 (base), and at the periphery of the liquid crystal display portion 72, a liquid crystal driving circuit 73, a circuit portion 74 including a memory circuit, an image processing circuit, and the like are formed. An input signal is processed in the circuit portion 74, and is transferred to the liquid crystal driving circuit 73, whereby an image is displayed on the liquid crystal display portion 72.

In the case where a liquid crystal display element of this type is used, since the monocrystalline silicon substrate is used, an IC technique *is* applicable. That is, a microprocessing technique, a method for forming a high quality thin film, a method for implanting impurities with high precision, etc. can be used. In addition, because of the application of these methods, the advantages of achieving high precision, high speed operation, and high reliability are realized.

## Claims

1. A three-dimensional display system comprising:
an optical source (1);
a liquid crystal display element (12) upon which light is incident from the optical source and which contains liquid crystal (19);
a driving means (14) for alternately driving the liquid crystal display element to display an image for a right eye and an image for a left eye at alternate timing;
a light modulator (50) upon which the light is incident from the liquid crystal display element and which provides a first polarized light used for the image for the right eye and provides a second polarized light used for the image for the left eye, the first and second polarized lights having different plane polarizations or having different circular polarizations;
a screen (6) on which the polarized lights emitted from the light modulator are projected; and
eyeglasses used for watching the screen, at least having a first polarizing plate for watching the first polarized light for the right eye and a second polarizing plate for watching the second polarized light for the left eye;
characterised in that the liquid crystal (19) in the liquid crystal display element (12) is disposed between two substrates (17, 18) which face each other;
and in that the driving means comprises a signal scanning portion (32) which outputs a driving signal for driving the liquid crystal display element; two signal storing means (33a, 33b) provided on an output side of the signal scanning portion; a first switching means (SW1) which alternately connects the signal scanning portion to one of the two signal storing means; a pixel driving portion (34) which receives and transfers the driving signal from one of the signal storing means to a pixel; and a second switching means (SW2) which connects the pixel driving portion to the signal storing means not connected to the signal scanning portion.

2. A three-dimensional display system according to claim 1, further comprising a shade filter (4) having a slit which removes excess light components, the shade filter being provided between the liquid crystal display element and the light modulator.

3. A three-dimensional display system according to claim 1, wherein the light modulator (50) comprises a liquid crystal panel and a voltage control means for regulating a voltage applied to the liquid crystal panel, and switches states in which light that is incident upon the liquid crystal panel is rotated to be emitted therefrom and in which the light that is incident upon the liquid crystal panel is emitted therefrom without being rotated.

4. A three-dimensional display system according to claim 1, wherein said first and second polarized lights are plane polarized and wherein an angle formed between the plane of polarization of the first polarized light and the plane of polarization of the second polarized light is in the range of 45° to 135°.

5. A three-dimensional display system according to claim 1, wherein a polarizing means upon which light is incident from the optical source and by which the incident light is polarized to be emitted to the liquid crystal display element is further provided, and a display mode of the liquid crystal display element uses polarization.

6. A three-dimensional display system according to claim 5, wherein the polarizing means is a polarization beam splitter.

7. A three-dimensional display system according to claim 5, further comprising a polarized light modulator upon which light is incident from the optical source, and which divides the incident light into a first polarized light and a second polarized light, each polarized or rotated direction being different, and which emits the two polarized lights under the condition that the polarized or the rotated directions thereof coincide with each other.

8. A three-dimensional display system according to claim 1, further comprising a light selection means (13) for alternately transmitting light, which has a selected color component, out of the incident light.

9. A three-dimensional display system according to claim 8, wherein the light selection means comprises a cyanide filter (29C) a magenta filter (29M), and a yellow filter (29Y), and each filter has two substrates (20, 21; 23, 24; 26, 27) facing each other, transparent electrodes formed on inside surfaces of the two substrates, and liquid crystal (22; 25; 28) corresponding to the each predetermined color inserted between the two substrates.

10. A three-dimensional display system according to claim 8, wherein the light selection means is formed of a mechanical R.B.G. rotary filter.

11. A three-dimensional display system according to claim 1, wherein the liquid crystal display element has a plurality of pixels, and a color filter is formed on each pixel.

12. A three-dimensional display system according to claim 1, wherein at least one of the substrates of the liquid crystal display element is a silicon substrate, and the driving means is integrated with the substrate.

13. A three-dimensional display system according to claim 12, wherein the liquid crystal display element has a plurality of pixels, and the driving means is formed behind each pixel.

14. A three-dimensional display system according to claim 12, wherein the liquid crystal display element has a plurality of pixels, and the driving means is formed at the periphery of a display portion constituted by the plurality of pixels.

15. A three-dimensional display system according to claim 1, wherein the liquid crystal display element has a structure in which light is incident from a transparent substrate, the incident light is reflected from a reflection means provided on a substrate which is disposed so as to face the transparent substrate, and an antireflection means is formed on a light incident side with respect to the reflection means.

16. A three-dimensional display system according to claim 1, wherein the display mode of the liquid crystal display element is one selected from the group consisting of a phase change mode in which a dichroic dye is added to liquid crystal, a polymer dispersion type liquid crystal display mode, a high-speed responsive type TN mode, a homogenious type nematic liquid crystal display mode, and a ferroelectric liquid crystal display mode.

17. A three-dimensional display system according to claim 16, wherein polymer dispersion type liquid crystal used in the polymer dispersion type liquid crystal display mode which is obtained in the following manners: liquid crystal is microcapsulated; a polymerizable compound is hardened by the irradiation of UV (ultraviolet rays), heating, etc. and a homogeneous solution containing liquid crystal and the hardened compound is prepared; a common solvent is evaporated from a solution containing liquid crystal, a polymer, and the common solvent; a solution containing liquid crystal and a thermoplastic resin is melted, followed by being cooled; a sponge-like cellulose film or glass particles with a micron size are impregnated with liquid crystal.

18. A three-dimensional display system comprising:
an optical source (1);
a polarizing means (70) upon which light is incident from the optical source and which provides a first polarized light used for an image for a right eye and provides a second polarized light used for an image for a left eye, the first and second polarized light having different plane polarizations or having different circular polarizations;
a first liquid crystal display element (10) which is provided in a travelling direction of the first polarized light from the polarizing means and which emits first incident light from the polarizing means as light having the image for the right eye, thereby emitting the first incident light to the polarizing means;
a second liquid crystal display element (10') which is provided in a travelling direction of the second polarized light from the polarizing means (70) and which emits second incident light from the polarizing means as light having the image for the left eye, thereby emitting the second incident light to the polarizing means;
a driving means (14) for driving the first and second liquid crystal display elements (10, 10') to simultaneously display the image for the right eye and the image for the left eye;
a screen (6) on which the lights emitted from the first and second light liquid crystal display elements are projected; and
eyeglasses used for watching the screen, at least having a first polarizing plate for watching the first polarized light for the right eye and a second polarizing plate for watching the second polarized light for the left eye;
characterised in that the driving means (14) comprises a signal scanning portion (32) which outputs a driving signal for driving the liquid crystal display element; two signal storing means (33a, 33b) provided on an output side of the signal scanning portion; a first switching means (SW1) which alternately connects the signal scanning portion to one of the two signal storing means; a pixel driving portion (34) which receives and transfers the driving signal from one of the signal storing means to pixels; and a second switching means (SW2) which connects the pixel driving portion to the signal storing means not connected to the signal scanning portion.

19. A three-dimensional display system as claimed in claim 18, wherein the polarising means is a prism.

20. A three-dimensional display system according to claim 18, wherein said first and second polarised lights are plane polarised and wherein an angle formed by the plane of polarisation of the first light and the plane of polarisation of the second light is in the range of 45° to 135°.

21. A three-dimensional display system according to claim 18, further comprising a light selection means for alternately transmitting light, which has a selected color component, out of the incident light.

22. A three-dimensional display system according to claim 21, wherein the light selection means comprises a cyanide filter, a magenta filter, and a yellow filter, and each filter has two substrates facing each other, transparent electrodes formed on inside surfaces of the two substrates, and liquid crystal corresponding to each predetermined color inserted between the two substrates.

23. A three-dimensional display system according to claim 21, wherein the light selection means is formed of a mechanical R.B.G. rotary filter.

24. A three-dimensional display system according to claim 18, wherein the liquid crystal display element has a plurality of pixels, and a color filter is formed on each pixel.

25. A three-dimensional display system according to claim 18, wherein at least one of the substrates of the liquid crystal display element is a silicon substrate, and the driving means is integrated with the substrate.

26. A three-dimensional display system according to claim 25, wherein the liquid crystal display element has a plurality of pixels, and the driving means is formed behind each pixel.

27. A three-dimensional display system according to claim 25, wherein the liquid crystal display element has a plurality of pixels, and the driving means is formed at the periphery of a display portion constituted by the plurality of pixels.

28. A three-dimensional display system according to claim 18, wherein the liquid crystal display element has a structure in which light is incident from a transparent substrate, the incident light is reflected from a reflection means provided on a substrate which is disposed so as to face the transparent substrate, and a antireflection means is formed on a light incident side with respect to the reflection means.

29. A three-dimensional display system according to claim 18, wherein the display mode of the liquid crystal display element is one selected from the group consisting of a phase change mode in which a dichroic dye is added to liquid crystal, a polymer dispersion type liquid crystal display mode, a high-speed responsive TN mode, a homogeneous type nematic liquid crystal display mode, and a ferroelectric liquid crystal display mode.

30. A three-dimensional display system according to claim 29, wherein polymer nematic liquid crystal used in the high-speed responsive TN display mode is one selected from the group consisting of biphenyl compounds, phenylester compounds, cyclohexane compounds, phenylpyrimidine compounds, dioxane compounds, diphenylacetylene compounds, alkenyl compounds, fluorine compounds, and mixtures thereof.

## Patentansprüche

1. Dreidimensionales Abbildungssystem mit:
einer optischen Quelle (1),
einem Flüssigkristalleinzeigeelement (12), auf das Licht von der optischen Quelle einfällt und das einen Flüssigkristall (19) enthält,
einer Ansteuereinrichtung (14) zum abwechselnden Ansteuern des Flüssigkristall-Anzeigeelementes, um ein Bild für ein rechtes Auge und ein Bild für ein linkes Auge zu abwechselnden Zeiten zu erzeugen,
einem Lichtmodulator (50), auf den Licht von dem Flüssigkristall-Anzeigeelement einfällt und der ein erstes polarisiertes Licht, das für das Bild für das rechte Auge verwendet ist, und ein zweites polarisiertes Licht, das für das Bild für das linke Auge verwendet ist, liefert, wobei das erste und das zweite polarisierte Licht verschiedene ebene Polarisationen oder verschiedene zirkulare Polarisationen haben,
einem Schirm (6), auf den das von dem Lichtmodulator emittierte polarisierte Licht geworfen ist, und
Augengläsern, verwendet zum Betrachten des Schirmes, die wenigstens ein erstes Polarisationsplättchen zum Betrachten des ersten polarisierten Lichtes für das rechte Auge und ein zweites Polarisationsplättchen zum Betrachten des zweiten polarisierten Lichtes für das linke Auge haben,
**dadurch gekennzeichnet,** daß der Flüssigkristall (19) in dem Flüssigkristall-Anzeigeelement (12) zwischen zwei einander gegenüberliegenden Substraten (17, 18) angeordnet ist, und daß die Ansteuereinrichtung aufweist: einen Signalabtastteil (32), der ein Ansteuersignal zum Ansteuern des Flüssigkristall-Anzeigeelementes ausgibt, zwei Signalspeichereinrichtungen (33a, 33b), die auf einer Ausgangsseite des Signalabtastteiles vorgesehen sind, eine erste Schalteinrichtung (SW1), die abwechselnd den Signalabtastteil mit einer der beiden Signalspeichereinrichtungen verbindet, einen Pixelansteuerteil (34), der das Ansteuersignal von einer der Signalspeichereinrichtungen empfängt und zu einem Pixel überträgt, und eine zweite Schalteinrichtung (SW2), die den Pixelansteuerteil mit der Signalspeichereinrichtung verbindet, die nicht mit dem Signalabtastteil verbunden ist.

2. Dreidimensionales Abbildungssystem nach Anspruch 1, weiterhin mit einem Schattenfilter (4) mit einem Schlitz, das überschüssige Lichtkomponenten entfernt, wobei das Schattenfilter zwischen dem Flüssigkristall-Anzeigeelement und dem Lichtmodulator vorgesehen ist.

3. Dreidimensionales Abbildungssystem nach Anspruch 1, bei dem der Lichtmodulator (50) eine Flüssigkristall-Frontplatte und eine Spannungssteuereinrichtung zum Einstellen einer an der Flüssigkristall-Frontplatte liegenden Spannung aufweist und Zustände schaltet, in denen Licht, das auf die Flüssigkristall-Frontplatte einfällt, gedreht wird, um von dort emittiert zu werden, und in denen das Licht, das auf die Flüssigkristall-Frontplatte einfällt, von dort ohne Drehung emittiert wird.

4. Dreidimensionales Abbildungssystem nach Anspruch 1, bei dem das erste und das zweite polarisierte Licht in einer Ebene polarisiert sind, und bei dem ein zwischen der Polarisationsebene des ersten polarisierten Lichtes und der Polarisationsebene des zweiten polarisierten Lichtes gebildeter Winkel im Bereich von 45° bis 135° liegt.

5. Dreidimensionales Abbildungssystem nach Anspruch 1, bei dem eine Polarisationseinrichtung, auf die Licht von der optischen Quelle einfällt und durch die das einfallende Licht polarisiert wird, um zu dem Flüssigkristall-Anzeigeelement emittiert zu werden, außerdem vorgesehen ist, und bei dem ein Anzeigemodus des Flüssigkristall-Anzeigeelemente eine Polarisation verwendet.

6. Dreidimensionales Abbildungssystem nach Anspruch 5, bei dem die Polarisationseinrichtung ein Polarisationsstrahlteiler ist.

7. Dreidimensionales Abbildungssystem nach Anspruch 5, weiterhin mit einem polarisierten Lichtmodulator, auf den Licht von der optischen Quelle einfällt und der das einfallende Licht in ein erstes polarisiertes Licht und ein zweites polarisiertes Licht unterteilt, wobei jede polarisierte oder gedrehte Richtung verschieden ist, und der die beiden polarisierten Lichtstrahlen unter der Bedingung emittiert, daß die polarisierten oder gedrehten Richtungen hiervon miteinander übereinstimmen.

8. Dreidimensionales Abbildungssystem nach Anspruch 1, weiterhin mit einer Lichtauswahleinrichtung (13) zum abwechselnden Übertragen von Licht, das eine gewählte Farbkomponente hat, aus dem einfallenden Licht.

9. Dreidimensionales Abbildungssystem nach Anspruch 8, bei dem die Lichtauswahleinrichtung ein Cyan-Filter (29C), ein Magenta-Filter (29M) und ein Gelb-Filter (29Y) aufweist und bei dem jedes Filter zwei Substrate (20, 21; 23, 24; 26,27), die einander gegenüberliegen. auf Innenflächen der beiden Substrate gebildete transparente Elektroden und einen jeder vorbestimmten Farbe entsprechenden Flüssigkristall (22; 25; 28), der zwischen die beiden Substrate eingefügt ist, hat.

10. Dreidimensionales Abbildungssystem nach Anspruch 8, bei dem die Lichtauswahleinrichtung aus einem mechanischen R.B.G.-Drehfilter gebildet ist.

11. Dreidimensionales Abbildungssystem nach Anspruch 1, bei dem das Flüssigkristall-Anzeigeelement eine Vielzahl von Pixels hat, und bei dem ein Farbfilter auf jedem Pixel gebildet ist.

12. Dreidimensionales Abbildungssystem nach Anspruch 1, bei dem wenigstens eines der Substrate des Flüssigkristall-Anzeigeelementes ein Siliciumsubstrat ist, und bei dem die Ansteuereinrichtung mit dem Substrat integriert ist.

13. Dreidimensionales Abbildungssystem nach Anspruch 12, bei dem das Flüssigkristall-Anzeigeelement eine Vielzahl von Pixels hat, und bei dem die Ansteuereinrichtung hinter jedem Pixel gebildet ist.

14. Dreidimensionales Abbildungssystem nach Anspruch 12, bei dem das Flüssigkristall-Anzeigeelement eine Vielzahl von Pixels hat, und bei dem die Ansteuereinrichtung am Rand eines durch die Vielzahl von Pixels gebildeten Anzeigeteiles ausgebildet ist.

15. Dreidimensionales Abbildungssystem nach Anspruch 1, bei dem das Flüssigkristall-Anzeigeelement eine Struktur hat, bei der Licht von einem transparenten Substrat einfällt. bei der das einfallende Licht von einer Reflexionseinrichtung reflektiert wird, die auf einem Substrat vorgesehen ist, das so angeordnet ist, daß es dem transparenten Substrat gegenüberliegt, und bei der eine Antireflexionseinrichtung auf einer Lichteinfallseite bezüglich der Reflexionseinrichtung ausgebildet ist.

16. Dreidimensionales Abbildungssystem nach Anspruch 1,
bei dem der Anzeigemodus des Flüssigkristall-Anzeigeelementes ein Modus ist, der aus der Gruppe gewählt ist, die aus einem Phasenänderungsmodus, bei welchem ein zweifarbiger Farbstoff einem Flüssigkristall beigefügt ist, einem Polymer-Dispersionstyp -Flüssigkristall-Anzeigemodus, einem TN-Modus des Typs, der auf hohe Geschwindigkeit anspricht, einem nematischen Flüssigkristall-Anzeigemodus des homogenen Typs und einem ferroelektrischen Flüssigkristall-Anzeigemodus besteht.

17. Dreidimensionales Abbildungssystem nach Anspruch 16, bei dem der Polymer-Dispersionstyp-Flüssigkristall, der im Polymer-Dispersionstyp-Flüssigkristall-Anzeigemodus verwendet wird, auf die folgende Weise erhalten ist:
Ein Flüssigkristall wird mikrogekapselt; eine polymerisierbare Verbindung wird durch Bestrahlung mit UV (Ultraviolettstrahlen) gehärtet, erwärmt usw. und eine homogene Lösung, die Flüssigkristall und die gehärtete Verbindung enthält, wird vorbereitet; ein gemeinsames Lösungsmittel wird aus einer Lösung verdampft, die Flüssigkristall, ein Polymer und das gemeinsame Lösungsmittel enthält; eine Lösung, die Flüssigkristall und ein thermoplastisches Harz enthält, wird geschmolzen, worauf sich ein Kühlen anschließt; ein schwammartiger Cellulosefilm oder Glaspartikel mit einer Mikronabmessung werden mit Flüssigkristall imprägniert.

18. Dreidimensionales Abbildungssystem mit:
einer optischen Quelle (1),
einer Polarisationseinrichtung (70), auf die Licht von der optischen Quelle einfällt und die ein erstes polarisiertes Licht, das für ein Bild für ein rechtes Auge verwendet ist, und ein zweites polarisiertes Licht, das für ein Bild für ein linkes Auge verwendet ist, liefert, wobei das erste und das zweite polarisierte Licht verschiedene ebene Polarisationen oder verschiedene zirkulare Polarisationen haben,
einem ersten Flüssigkristall-Anzeigeelement (10), das in einer Laufrichtung des ersten polarisierten Lichtes von der Polarisationseinrichtung vorgesehen ist und das erstes einfallendes Licht von der Polarisationseinrichtung als Licht mit dem Bild für das rechte Auge emittiert, um dadurch das erste einfallende Licht zu der Polarisationseinrichtung zu emittieren.
einem zweiten Flüssigkristall-Anzeigeelement (10'), das in der Laufrichtung des zweiten polarisierten Lichtes von der Polarisationseinrichtung (70) vorgesehen ist und das ein zweites einfallendes Licht von der Polarisationseinrichtung als Licht mit dem Bild für das linke Auge emittiert, um dadurch das zweite einfallende Licht zu der Polarisationseinrichtung zu emittieren,
einer Ansteuereinrichtung (14) zum Ansteuern der ersten und zweiten Flüssigkristall-Anzeigeelemente (10, 10'), um gleichzeitig das Bild für das rechte Auge und das Bild für das linke Auge anzuzeigen,
einem Schirm (6), auf den die von den ersten und zweiten Licht-Flüssigkristall-Anzeigeelemente emittierten Lichtstrahlen geworfen werden, und
Augengläsern, verwendet zum Betrachten des Schirmes, die wenigstens ein erstes Polarisationsplättchen zum Betrachten des ersten polarisierten Lichtes für das rechte Auge und ein zweites Polarisationsplättchen zum Betrachten des zweiten polarisierten Lichtes für das linke Auge haben,
**dadurch gekennzeichnet,** daß die Ansteuereinrichtung (14) aufweist: einen Signalabtastteil (32), der ein Ansteuersignal zum Ansteuern des Flüssigkristall-Anzeigeelementes abgibt,
zwei Signalspeichereinrichtungen (33a, 33b), die auf einer Ausgangsseite des Signalabtastteiles vorgesehen sind, eine erste Schalteinrichtung (SW1), die abwechselnd den Signalabtastteil mit einer der beiden Signalspeichereinrichtungen verbindet, einen Pixelansteuerteil (34), der das Ansteuersignal von einer der Signalspeichereinrichtungen empfängt und zu Pixels überträgt, und eine zweite Schalteinrichtung (SW2), die den Pixelansteuerteil mit der Signalspeichereinrichtung verbindet, die nicht mit dem Signalabtastteil verbunden ist.

19. Dreidimensionales Abbildungssystem nach Anspruch 18, bei dem die Polarisationseinrichtung ein Prisma ist.

20. Dreidimensionales Abbildungssystem nach Anspruch 18, bei dem die ersten und zweiten polarisierten Lichtstrahlen in einer Ebene polarisiert sind, und bei dem ein Winkel, der durch die Polarisationsebene der ersten Lichtstrahlen und die Polarisationsebene der zweiten Lichtstrahlen gebildet ist, im Bereich von 45° bis 135° liegt.

21. Dreidimensionales Abbildungssystem nach Anspruch 18, weiterhin mit einer Lichtauswahleinrichtung zum abwechselnden Übertragen von Licht, das eine gewählte Farbkomponente hat, aus dem einfallenden Licht.

22. Dreidimensionales Abbildungssystem nach Anspruch 21, bei dem die Lichtauswahleinrichtung ein Cyan-Filter, ein Magenta-Filter und ein Gelb-Filter aufweist, und bei dem jedes Filter zwei einander gegenüberliegende Substrate, auf Innenflächen der beiden Substrate gebildete transparente Elektroden und einen Flüssigkristall entsprechend jeder vorbestimmten Farbe, der zwischen die beiden Substrate eingefügt ist, hat.

23. Dreidimensionales Abbildungssystem nach Anspruch 21, bei dem die Lichtauswahleinrichtung aus einem mechanischen R.B.G.-Drehfilter gebildet ist.

24. Dreidimensionales Abbildungssystem nach Anspruch 18, bei dem das Flüssigkristall-Anzeigeelement eine Vielzahl von Pixels hat, und bei dem ein Farbfilter auf jedem Pixel ausgebildet ist.

25. Dreidimensionales Abbildungssystem nach Anspruch 18, bei dem wenigstens eines der Substrate des Flüssigkristall-Anzeigeelementes ein Siliciumsubstrat ist, und bei dem die Ansteuereinrichtung mit dem Substrat integriert ist.

26. Dreidimensionales Abbildungssystem nach Anspruch 25, bei dem das Flüssigkristall-Anzeigeelement eine Vielzahl von Pixels hat, und bei dem die Ansteuereinrichtung hinter jedem Pixel ausgebildet ist.

27. Dreidimensionales Abbildungssystem nach Anspruch 25, bei dem das Flüssigkristall-Anzeigeelement eine Vielzahl von Pixels hat, und bei dem die Ansteuereinrichtung an dem Rand eines durch die Vielzahl von Pixels gebildeten Anzeigeteiles ausgebildet ist.

28. Dreidimensionales Abbildungssystem nach Anspruch 18, bei dem das Flüssigkristall-Anzeigeelement eine Struktur hat, bei der Licht von einem transparenten Substrat einfällt, bei der das einfallende Licht von einer Reflexionseinrichtung reflektiert wird, die auf einem Substrat vorgesehen ist, das so angeordnet ist, daß es dem transparenten Substrat gegenüberliegt, und bei der eine Antireflexionseinrichtung auf einer Lichteinfallseite bezüglich der Reflexionseinrichtung ausgebildet ist.

29. Dreidimensionales Abbildungssystem nach Anspruch 18, bei dem der Anzeigemodus des Flüssigkristall-Anzeigeelementes ein Modus ist. der aus der Gruppe ausgewählt ist, die aus einem Phasenänderungsmodus, in welchem ein zweifarbiger Farbstoff einem Flüssigkristall beigefügt ist, einem Polymer-Dispersionstyp-Flüssigkristall-Anzeigemodus, einem TN-Modus, der auf hohe Geschwindigkeit anspricht, einem nematischen Flüssigkristall-Anzeigemodus des homogenen Typs und einem ferroelektrischen Flüssigkristall-Anzeigemodus besteht.

30. Dreidimensionales Abbildungssystem nach Anspruch 29, bei dem der polymere nematische Flüssigkristall, der im TN-Anzeigemodus, der auf hohe Geschwindigkeiten anspricht, verwendet wird, ein Kristall ist, der aus der Gruppe ausgewählt ist, die aus Biphenyl-Verbindungen, Phenylester-Verbindungen, Cyclohexan-Verbindungen, Phenylpyrimidin-Verbindungen, Dioxan-Verbindungen, Diphenylacetylen-Verbindungen, Alkenyl-Verbindungen, Fluor-Verbindungen und Mischungen hiervon besteht.

## Revendications

1. Système d'affichage tridimensionnel, comprenant:
une source optique (1);
un élément d'affichage à cristaux liquides (12) sur lequel tombe une lumière en provenance de la source optique et qui contient des cristaux liquides (19);
un moyen de commande (14) pour commander de façon alternée l'élément d'affichage à cristaux liquides pour qu'il affiche une image pour un oeil droit et une image pour un oeil gauche suivant un rythme alterné;
un modulateur de lumière (50) sur lequel tombe la lumière en provenance de l'élément d'affichage à cristaux liquides et qui fournit une première lumière polarisée utilisée pour l'image destinée à l'oeil droit et une seconde lumière polarisée utilisée pour l'image destinée à l'oeil gauche, les première et seconde lumières polarisées ayant des polarisations rectilignes différentes ou des polarisations circulaires différentes;
un écran (6) sur lequel sont projetées les lumières polarisées émises par le modulateur de lumière; et
des lunettes utilisées pour regarder l'écran, comportant au moins une première plaque de polarisation pour regarder la première lumière polarisée pour l'oeil droit et une seconde plaque de polarisation pour regarder la seconde lumière polarisée pour l'oeil gauche;
caractérisé en ce que les cristaux liquides (19) contenus dans l'élément d'affichage à cristaux liquides (12) sont disposés entre deux substrats (17, 18) en regard l'un de l'autre;
et en ce que le moyen de commande comprend une partie de balayage de signal (32) qui délivre en sortie un signal de commande pour commander l'élément d'affichage à cristaux liquides; deux moyens de stockage de signal (33a, 33b) prévus du côté d'une sortie de la partie de balayage de signal; un premier moyen de commutation (SW1) qui relie de façon alternée la partie de balayage de signal à l'un des deux moyens de stockage de signal; une partie de commande de pixel (34) qui reçoit et transfère le signal de commande en provenance de l'un des moyens de stockage de signal à un pixel; et un second moyen de commutation (SW2) qui relie la partie de commande de pixel au moyen de stockage de signal non relié à la partie de balayage de signal.

2. Système d'affichage tridimensionnel selon la revendication 1, comprenant, en outre, un filtre d'ombrage (4) comportant une fente qui élimine les composantes de lumière en excès, le filtre d'ombrage étant prévu entre l'élément d'affichage à cristaux liquides et le modulateur de lumière.

3. Système d'affichage tridimensionnel selon la revendication 1, dans lequel le modulateur de lumière (50) comprend un panneau à cristaux liquides et un moyen de commande de tension pour réguler une tension appliquée au panneau à cristaux liquides, et commute les états suivant lequel la lumière tombant sur le panneau à cristaux liquides subit une rotation pour être émise à partir de celui-ci, et suivant lequel la lumière tombant sur le panneau à cristaux liquides est émise à partir de celui-ci sans subir de rotation.

4. Système d'affichage tridimensionnel selon la revendication 1, dans lequel lesdites première et seconde lumières polarisées sont polarisées de façon rectiligne et dans lequel un angle formé entre le plan de polarisation de la première lumière polarisée et le plan de polarisation de la seconde lumière polarisée se situe dans la plage allant de 45° à 135°.

5. Système d'affichage tridimensionnel selon la revendication 1, dans lequel un moyen de polarisation sur lequel tombe la lumière en provenance de la source optique et par lequel la lumière incidente est polarisée pour être émise vers l'élément d'affichage à cristaux liquides est en outre prévu, et un mode d'affichage de l'élément d'affichage à cristaux liquides utilise la polarisation.

6. Système d'affichage tridimensionnel selon la revendication 5, dans lequel le moyen de polarisation est un diviseur de faisceau de polarisation.

7. Système d'affichage tridimensionnel selon la revendication 5, comprenant, en outre, un modulateur de lumière polarisée sur lequel tombe la lumière en provenance de la source optique, et qui divise la lumière incidente en une première lumière polarisée et une seconde lumière polarisée, chaque direction de polarisation ou de rotation étant différente, et qui émet les deux lumières polarisées à la condition que leurs directions de polarisation ou de rotation coïncident l'une avec l'autre.

8. Système d'affichage tridimensionnel selon la revendication 1, comprenant, en outre, un moyen de sélection de lumière (13) pour transmettre de façon alternée, à partir de la lumière incidente, la lumière qui comporte une composante de couleur sélectionnée.

9. Système d'affichage tridimensionnel selon la revendication 8, dans lequel le moyen de sélection de lumière comprend un filtre de couleur cyan (29C), un filtre de couleur magenta (29M) et un filtre de couleur jaune (29Y), et chaque filtre comporte deux substrats (20, 21; 23, 24; 26, 27) en regard l'un de l'autre, des électrodes transparentes formées sur les surfaces intérieures des deux substrats, et des cristaux liquides (22; 25; 28) correspondant à chaque couleur prédéterminée insérés entre les deux substrats.

10. Système d'affichage tridimensionnel selon la revendication 8, dans lequel le moyen de sélection de lumière est constitué par un filtre rotatif R.B.G. (rouge, vert, bleu) mécanique.

11. Système d'affichage tridimensionnel selon la revendication 1, dans lequel l'élément d'affichage à cristaux liquides comporte une multiplicité de pixels, un filtre coloré étant formé sur chaque pixel.

12. Système d'affichage tridimensionnel selon la revendication 1, dans lequel au moins l'un des substrats de l'élément d'affichage à cristaux liquides est un substrat en silicium, et le moyen de commande est intégré au substrat.

13. Système d'affichage tridimensionnel selon la revendication 12, dans lequel l'élément d'affichage à cristaux liquides comporte une multiplicité de pixels, et le moyen de commande est formé derrière chaque pixel.

14. Système d'affichage tridimensionnel selon la revendication 12, dans lequel l'élément d'affichage à cristaux liquides comporte une multiplicité de pixels, et le moyen de commande est formé à la périphérie d'une partie d'affichage constituée par la multiplicité de pixels.

15. Système d'affichage tridimensionnel selon la revendication 1, dans lequel l'élément d'affichage à cristaux liquides comporte une structure suivant laquelle la lumière tombe à partir d'un substrat transparent, la lumière incidente est réfléchie par un moyen de réflexion prévu sur un substrat qui est disposé de façon à être en regard du substrat transparent, et un moyen anti-réfléchissant est formé sur un côté d'incidence de lumière par rapport au moyen de réflexion.

16. Système d'affichage tridimensionnel selon la revendication 1, dans lequel le mode d'affichage de l'élément d'affichage à cristaux liquides est un mode sélectionné dans le groupe comprenant un mode à changement de phase dans lequel un colorant dichroïque est ajouté aux cristaux liquides, un mode d'affichage par cristaux liquides du type à dispersion dans un polymère, un mode d'affichage par cristaux liquides nématiques en hélice du type à réponse rapide, un mode d'affichage par cristaux liquides nématiques du type homogène, et un mode d'affichage par cristaux liquides ferroélectriques.

17. Système d'affichage tridimensionnel selon la revendication 16, dans lequel les cristaux liquides du type à dispersion dans un polymère utilisés dans le mode d'affichage par cristaux liquides du type à dispersion dans un polymère sont obtenus selon les manières suivantes: les cristaux liquides sont micro-encapsulés; un composé de polymérisation est durci par irradiation de rayons UV (rayons ultraviolets), chauffage, etc., et une solution homogène contenant les cristaux liquides et le composé durci est préparée; un solvant commun est évaporé d'une solution contenant les cristaux liquides, un polymère et le solvant commun; une solution contenant les cristaux liquides et une résine thermoplastique est fondue, puis refroidie; un film cellulosique du type spongieux ou des particules de verre de dimensions de l'ordre du micron sont imprégnés de cristaux liquides.

18. Système d'affichage tridimensionnel, comprenant:
une source optique (1);
un moyen de polarisation (70) sur lequel tombe une lumière en provenance de la source optique et qui fournit une première lumière polarisée utilisée pour une image pour un oeil droit, et une seconde lumière polarisée utilisée pour une image pour un oeil gauche, les première et seconde lumières polarisées ayant des polarisations rectilignes différentes ou des polarisations circulaires différentes;
un premier élément d'affichage à cristaux liquides (10) qui est prévu dans une direction de déplacement de la première lumière polarisée en provenance du moyen de polarisation et qui émet une première lumière incidente à partir du moyen de polarisation en tant que lumière comportant l'image pour l'oeil droit, pour émettre ainsi la première lumière incidente vers le moyen de polarisation;
un second élément d'affichage à cristaux liquides (10') qui est prévu dans une direction de déplacement de la seconde lumière polarisée en provenance du moyen de polarisation (70) et qui émet une seconde lumière incidente à partir du moyen de polarisation en tant que lumière comportant l'image pour l'oeil gauche, pour émettre ainsi la seconde lumière incidente vers le moyen de polarisation;
un moyen de commande (14) pour commander les premier et second éléments d'affichage à cristaux liquides (10, 10') pour afficher simultanément l'image pour l'oeil droit et l'image pour l'oeil gauche;
un écran (6) sur lequel sont projetées les lumières émises par les premier et second éléments d'affichage à cristaux liquides; et
des lunettes utilisées pour regarder l'écran, comportant au moins une première plaque de polarisation pour regarder la première lumière polarisée pour l'oeil droit et une seconde plaque de polarisation pour regarder la seconde lumière polarisée pour l'oeil gauche;
caractérisé en ce que le moyen de commande (14) comprend une partie de balayage de signal (32) qui délivre en sortie un signal de commande pour commander l'élément d'affichage à cristaux liquides; deux moyens de stockage de signal (33a, 33b) prévus du côté d'une sortie de la partie de balayage de signal; un premier moyen de commutation (SW1) qui relie de façon alternée la partie de balayage de signal à l'un des deux moyens de stockage de signal; une partie de commande de pixel (34) qui reçoit et transfère le signal de commande en provenance de l'un des moyens de stockage de signal à des pixels; et un second moyen de commutation (SW2) qui relie la partie de commande de pixel au moyen de stockage de signal non relié à la partie de balayage de signal.

19. Système d'affichage tridimensionnel selon la revendication 18, dans lequel le moyen de polarisation est un prisme.

20. Système d'affichage tridimensionnel selon la revendication 18, dans lequel lesdites première et seconde lumières polarisées sont polarisées de façon rectiligne et dans lequel un angle formé entre le plan de polarisation de la première lumière et le plan de polarisation de la seconde lumière se situe dans la plage allant de 45° à 135°.

21. Système d'affichage tridimensionnel selon la revendication 18, comprenant, en outre, un moyen de sélection de lumière pour transmettre de façon alternée, à partir de la lumière incidente, la lumière qui comporte une composante de couleur sélectionnée.

22. Système d'affichage tridimensionnel selon la revendication 21, dans lequel le moyen de sélection de lumière comprend un filtre de couleur cyan, un filtre de couleur magenta et un filtre de couleur jaune, et chaque filtre comporte deux substrats en regard l'un de l'autre, des électrodes transparentes formées sur les surfaces intérieures des deux substrats, et des cristaux liquides correspondant à chaque couleur prédéterminée insérés entre les deux substrats.

23. Système d'affichage tridimensionnel selon la revendication 21, dans lequel le moyen de sélection de lumière est constitué par un filtre rotatif R.B.G. (rouge, vert, bleu) mécanique.

24. Système d'affichage tridimensionnel selon la revendication 18, dans lequel l'élément d'affichage à cristaux liquides comporte une multiplicité de pixels, et un filtre coloré est formé sur chaque pixel.

25. Système d'affichage tridimensionnel selon la revendication 18, dans lequel au moins l'un des substrats de l'élément d'affichage à cristaux liquides est un substrat en silicium, et le moyen de commande est intégré au substrat.

26. Système d'affichage tridimensionnel selon la revendication 25, dans lequel l'élément d'affichage à cristaux liquides comporte une multiplicité de pixels, et le moyen de commande est formé derrière chaque pixel.

27. Système d'affichage tridimensionnel selon la revendication 25, dans lequel l'élément d'affichage à cristaux liquides comporte une multiplicité de pixels, et le moyen de commande est formé à la périphérie d'une partie d'affichage constituée par la multiplicité de pixels.

28. Système d'affichage tridimensionnel selon la revendication 18, dans lequel l'élément d'affichage à cristaux liquides comporte une structure suivant laquelle la lumière tombe à partir d'un substrat transparent, la lumière incidente est réfléchie par un moyen de réflexion prévu sur un substrat qui est disposé de façon à être en regard du substrat transparent, et un moyen anti-réfléchissant est formé sur un côté d'incidence de lumière par rapport au moyen de réflexion.

29. Système d'affichage tridimensionnel selon la revendication 18, dans lequel le mode d'affichage de l'élément d'affichage à cristaux liquides est un mode sélectionné dans le groupe comprenant un mode à changement de phase dans lequel un colorant dichroïque est ajouté aux cristaux liquides, un mode d'affichage par cristaux liquides du type à dispersion dans un polymère, un mode d'affichage par cristaux liquides nématiques en hélice du type à réponse rapide, un mode d'affichage par cristaux liquides nématiques du type homogène, et un mode d'affichage par cristaux liquides ferroélectriques.

30. Système d'affichage tridimensionnel selon la revendication 29, dans lequel les cristaux liquides nématiques utilisés dans le mode d'affichage par cristaux liquides nématiques en hélice du type à réponse rapide sont choisis dans le groupe constitué par les composés de diphényle, les composés de phénylester, les composés de cyclohexane, les composés de phénylpyrimidine, les composés de dioxane, les composés de diphénylacétylène, les composés d'alcényle, les composés de fluor, et leurs mélanges.
